(19) Europäisches Patentamt

European Patent Office

Office européen des brevets

(11) **EP 0 659 324 B1**

(12) **EUROPEAN PATENT SPECIFICATION**

(45) Date of publication and mention
of the grant of the patent:
**12.04.2000 Bulletin 2000/15**

(51) Int. Cl.⁷: **H04N 13/04**

(86) International application number:
**PCT/US93/08412**

(21) Application number: **93921399.7**

(22) Date of filing: **07.09.1993**

(87) International publication number:
**WO 94/06249 (17.03.1994 Gazette 1994/07)**

(54) **STROBOSCOPIC ILLUMINATION SYSTEM FOR VIDEO DISPLAYS**

STROBOSKOPISCHES BELEUCHTUNGSSYSTEM FÜR VIDEOANZEIGEN

SYSTEME D'ECLAIRAGE STROBOSCOPIQUE POUR AFFICHAGE VIDEO

(84) Designated Contracting States:
**DE FR GB IT NL**

(30) Priority: **09.09.1992 US 942718**
**01.03.1993 US 24670**
**17.08.1993 US 105811**

(43) Date of publication of application:
**28.06.1995 Bulletin 1995/26**

(73) Proprietor: **EICHENLAUB, Jesse B.**
**Penfield, NY 14526 (US)**

(72) Inventor: **EICHENLAUB, Jesse B.**
**Penfield, NY 14526 (US)**

(74) Representative:
**Carpmael, John William Maurice et al**
**CARPMAELS & RANSFORD**
**43 Bloomsbury Square**
**London, WC1A 2RA (GB)**

(56) References cited:
**EP-A- 0 570 179**          **WO-A-90/05429**
**GB-A- 2 172 733**          **US-A- 5 132 839**

• **PROCEEDINGS OF THE SID , vol. 27, no. 2, 1986 NEW YORK,NY,USA, pages 133-137, A. SCHWARTZ 'Head Tracking Stereoscopic Display'**

**Description**

BACKGROUND

1. Field of the Invention

This invention relates to illumination systems designed to improve image resolution and permit look-around viewing in liquid crystal and similar flat panel transmissive three dimensional (3-D) displays and enhanced resolution and color two dimensional (2-D) displays, for use in computers, television and the like viewing apparatus.

2. Prior Art

Several display systems are on the market today which are capable of generating three-dimensional images based on the use of stereopairs, i.e., complementary images, which when directed to the appropriate eye of the observer, produce a perception of three-dimensionality. Two of such systems, one made by Stereographics, Inc., the other by Tektronix Corp., utilize cathode ray tubes in conjunction with liquid crystal light valves designed to direct the appropriate half of the stereopair to the left or right eye of the observer. Both of these systems require the observer to wear special glasses. In addition, in order to achieve full resolution, these displays operate at frame rate twice the standard television (TV) scanning rates.

A third system made by Dimension Technologies Inc. is autostereoscopic, i.e., it permits the observer to perceive 3-D without the need to wear glasses. The system uses a transmissive image generating liquid crystal panel (LCD) and is disclosed in US-A- 4,717,949; 4,829,365 and 5,040,878. In this system a multiplicity of parallel, equidistant, thin, bright, vertical light lines is generated using an optical device termed the "reflection plate" which carries on its one surface opposite the planar surface facing the LCD, a series of parallel ridges equal in numbers to the number of said light lines. The ridges, triangular in cross-section, are designed to intercept light rays tangentially projected by a cylindrical lens onto said ridge-bearing surface of said reflection plate from a linearly configured light source disposed on the vertical side of the LCD. This method for generating a lattice of lines is specifically described in US-A-5,040,878. An image-generating LCD is situated parallel to and in front of a reflection plate, separated by a small fixed distance of, say, 3 mm, such that the observer, due to the parallax effect of vision, sees with his left eye the light lines through the odd-numbered pixel columns of the LCD, and the even-numbered pixel columns with his right eye. Thus, an illusion of depth is created, albeit by sacrificing one half of the pixel resolution in the 3-D image.

Other examples of autostereoscopic display systems are disclosed in EP-A-570 179 and US-A-5132839.

Another optical configuration for the generation of lines for an autostereoscopic display has been disclosed in US-A-5,036,385, which employs a lenticular lens or fly's eye lens to generate a lattice of light lines. This configuration allows multiple sets of light lines in different locations to be made to flash on and off in sequence, allowing for the display of full resolution autostereoscopic images that can be viewed in correct perspective from across a wide angle. These configurations also allow the generation of multiple sets of light lines or points for the display of two dimensional images with resolution greater than that provided by the pixels of the LCD by means explained in US-A-5,036,385.

Accordingly, it is an object of this invention to provide illumination systems for imaging devices, such as disclosed in US-A-5,036,385, which will be effective, economical and convenient for implementation of full resolution 3-D displays, look around 3-D displays, and enhanced resolution 2-D displays.

Another object of this invention is the use of fluorescent lamps for the illumination system.

A further object of this invention is to utilize stroboscopic gas filled arc lamps for said illumination systems.

Yet another object of this invention is to use electro-optical shutters in conjunction with the appropriate light source for said illumination systems.

Still another object of this invention is to utilize high-brightness projection type cathode ray tubes as the means for generating appropriate light patterns for use in said illumination systems.

An additional object of this invention is to use two-dimensional matrices of high-brightness light-emitting diodes (LEDs) of any one or any combination of at least three different colors as the means for generating appropriate light patterns for use in said illumination systems.

A further object of this invention is to use an electro-luminescent or AC plasma display as light sources for generating appropriate light patterns for use in said illumination systems.

Yet another object of this invention is to provide electronic control systems to control the timing of on-off states of said light sources and said electro-optical shutters in synchronization with the raster scanning of said flat panel displays for the purpose of formation of 3-D and 2-D images.

Still a further object of this invention is the implementation of said illumination systems using a plurality of light sources emitting light of different colors in conjunction with a monochromatic flat panel light valve displays for the purpose of generating full resolution 3-D and enhanced resolution 2-D color images without image breakup being apparent to the user.

It is also an object of this invention to provide a device which can sense the position of a single observer's head, and position the optics within the stereo display so that the central viewing zone is automatically aligned on the observers head, and remains aligned on it as the person moves their head back and forth and sideways.

A further object of this invention is to provide a device that allows an observer a wide latitude for head movement and body position when using an autostereoscopic display.

Another object of this invention is to provide a device which uses head position data to alter the operation of a software program, so that the program always displays images on a screen with a perspective appropriate to the observer's eye positions.

Yet another object of this invention is to achieve the above objectives without the use of moving parts within the display.

Still other objects will be apparent to those skilled in the art upon reference to the following detailed description and the claims.

SUMMARY OF THE INVENTION

The invention is set out in the independent claims.

BRIEF DESCRIPTION OF THE DRAWINGS

FIG. 1 is a schematic diagram which illustrates the basic optical concepts of the invention.

FIG. 2 is a schematic view from above of another embodiment of this invention, an illumination system employing two stroboscopic light sources.

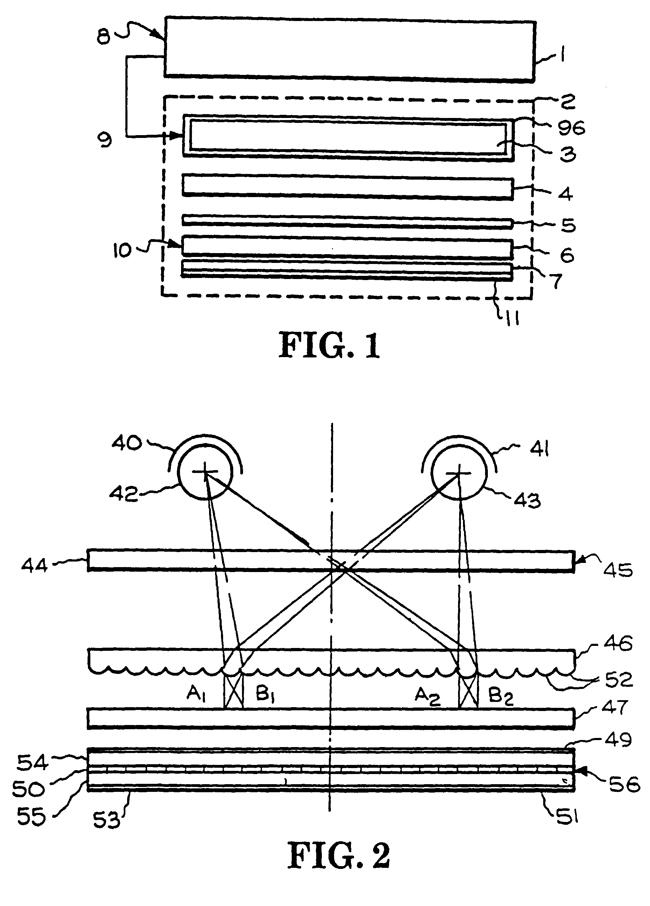

FIG.s 3a - 3c are a timing diagram which illustrates the timing involved between the address of pixels an the generation of images due to changes in pixel states after address and the flashing of the various lamps of FIG. 2.

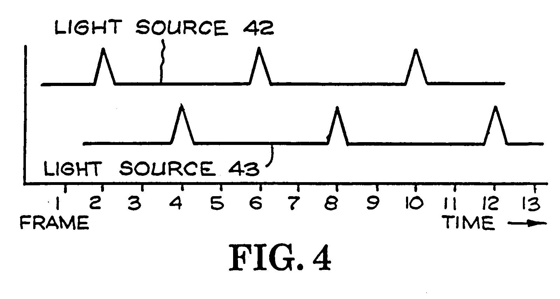

FIG. 4 is another timing diagram which illustrates the relation between the generation of video fields in the display and the timing of the light pulses from the stroboscopic light sources.

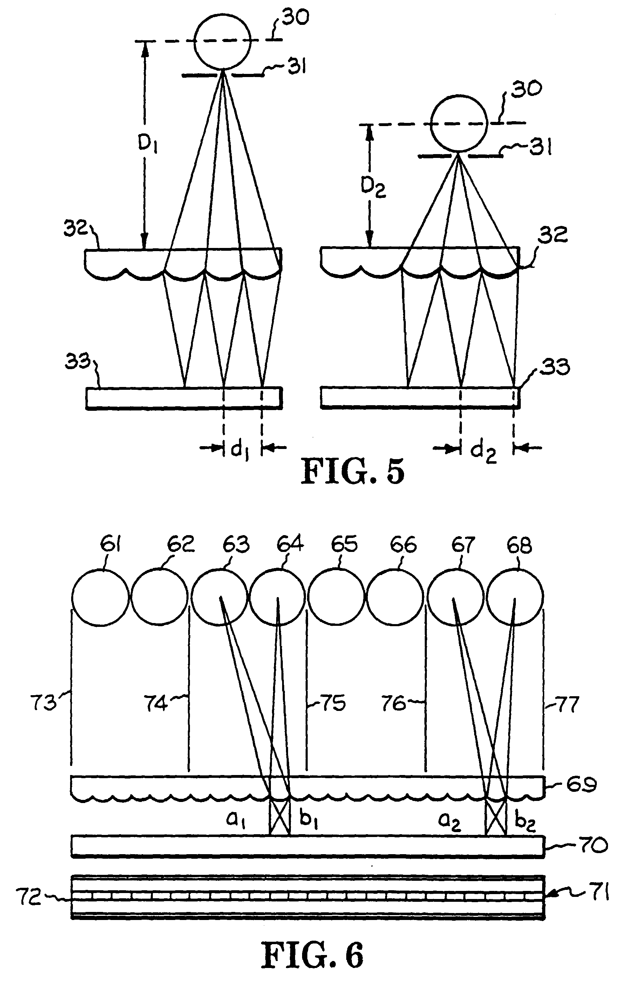

FIG. 5 is a portion of the system of FIG. 2 demonstrating the effect of varying the distances between the elements of the optical system.

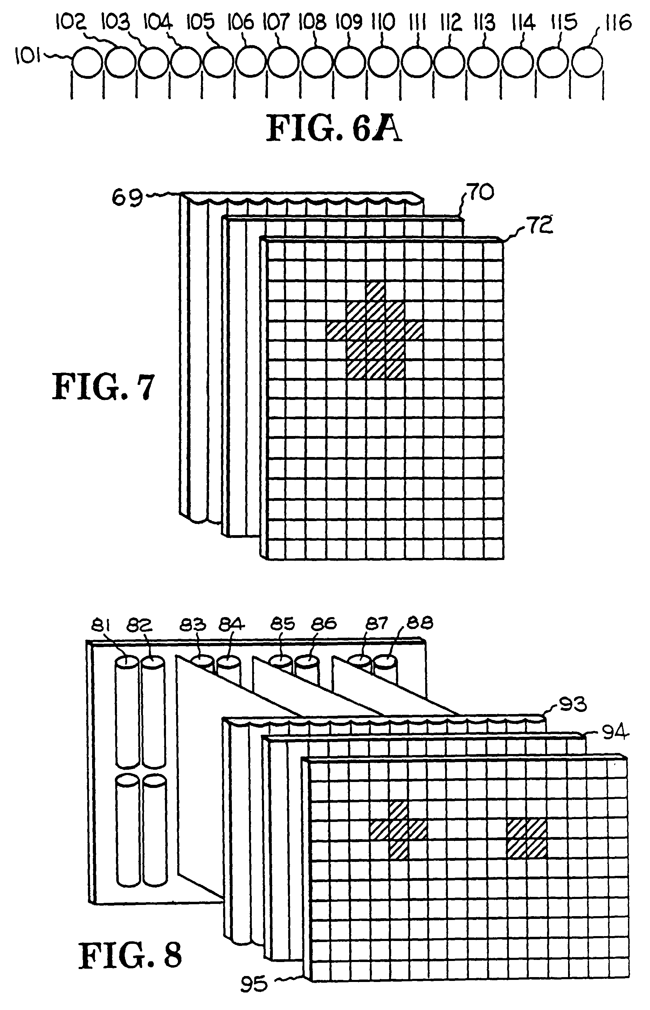

FIG. 6 is a schematic optical layout, as seen from above, in which a plurality of stroboscopic light sources are employed operating in synchronism with the image generation using column by column addressing of the liquid crystal panel.

FIG. 6A is an arrangement that can be used to generate four sets of light lines for a four zone display.

FIG. 7 shows schematically the configuration of a display using the illuminating system of FIG. 6.

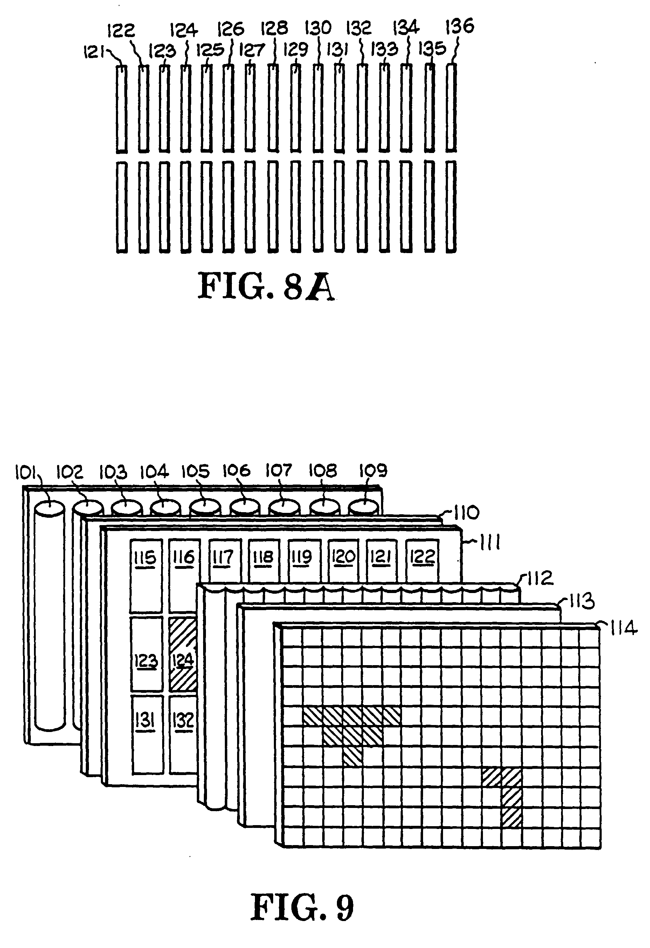

FIG. 8 is an autostereoscopic display utilizing segmented light sources for generating light lines of partial length to provide further improvement in the method for using stroboscopic means to increase resolution of autostereoscopic and 2-D displays where the liquid crystal display is addressed row by row.

FIG. 8A illustrates a lamp arrangement capable of producing four sets of light lines.

FIG. 9 is a schematic diagram of an optical layout for using electro-optical shutter means in conjunction with linear geometry light sources in another version of an illumination system of the present invention.

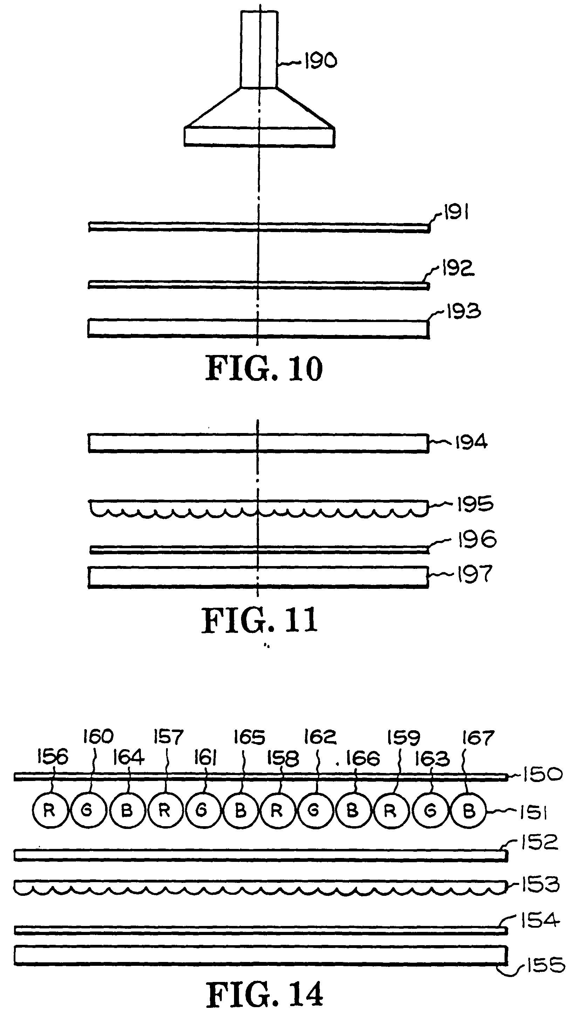

FIG. 10 is a schematic diagram of a top view of an optical layout for implementing the illumination system using a cathode ray tube.

FIG. 11 is a schematic diagram of a top view of an optical layout for using an electro-luminescent device or an AC plasma display as a light source in the illumination system.

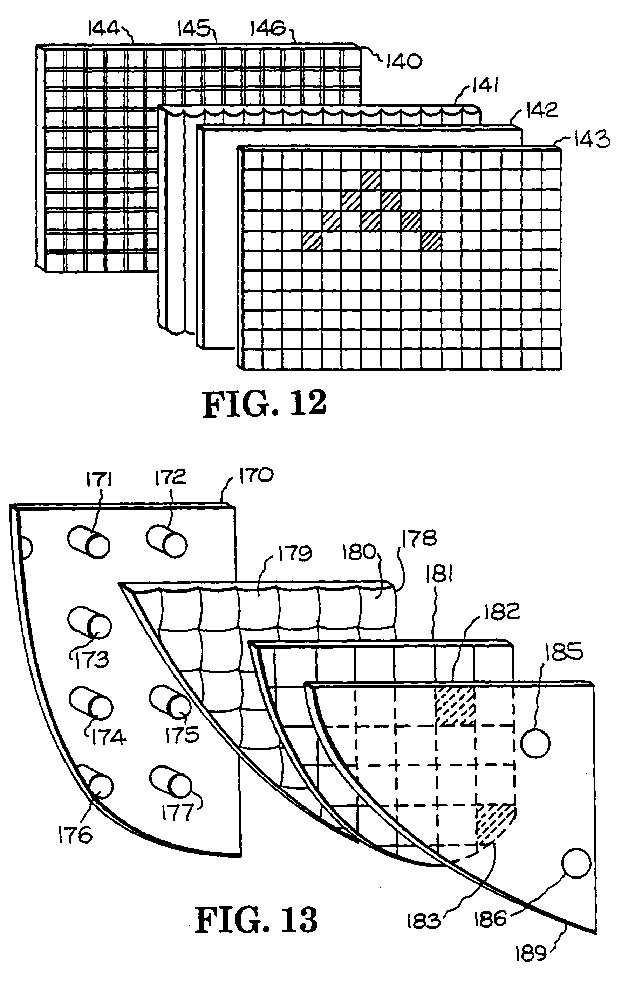

FIG. 12 is a schematic diagram of an optical layout for using light emitting diodes as light sources in the illumination system.

FIG. 13 is a schematic diagram of an optical layout of an enhanced resolution 2-D display in which light emitting diodes of different colors are used as light sources and a fly's eye lens is employed as the optical means for directing and focussing light.

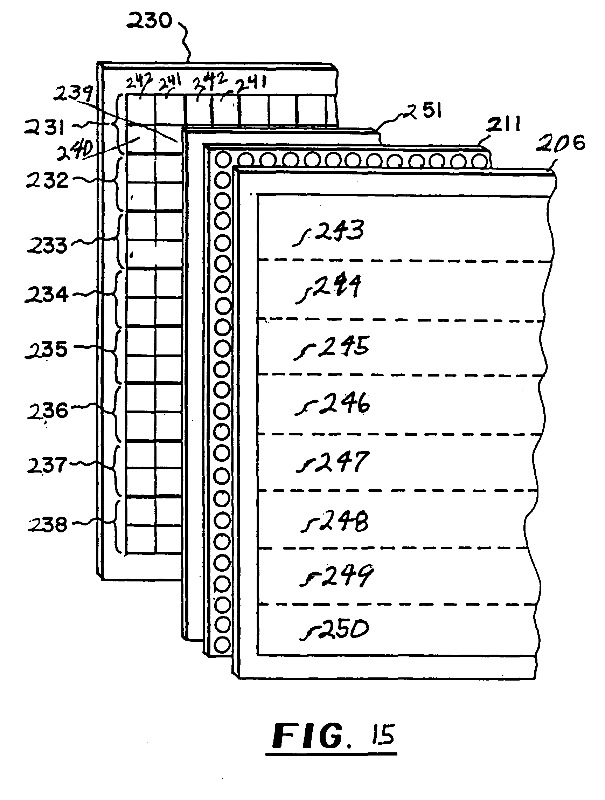

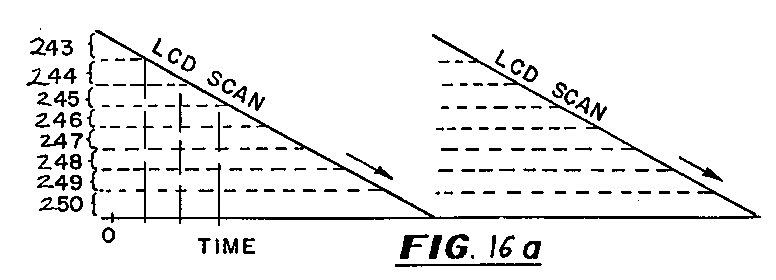

FIG. 14 is a schematic diagram of a top view of an optical layout and control electronics for implementing both 2-D and 3-D displays using light sources of different colors.

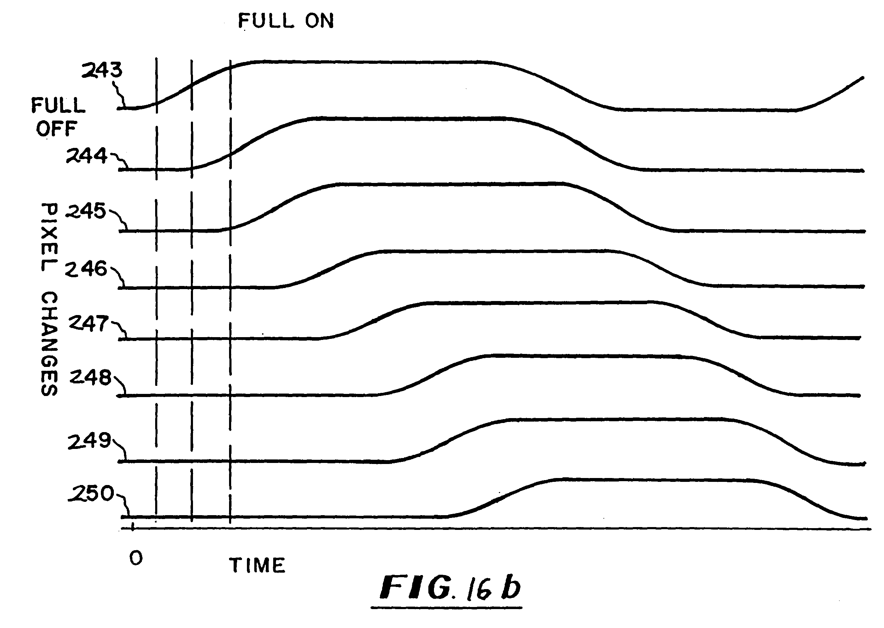

FIG. 15 diagrams an alternate illumination configuration using a large number of lamps and a suitable fly's eye lens to achieve the same effect as the illumination system in FIG. 2, but which occupies a smaller volume.

FIG.s 16a - 16c diagrams the timing involved between the address of the LCD, changes in pixel states after address, and flashing of the various lamps shown in FIG. 15.

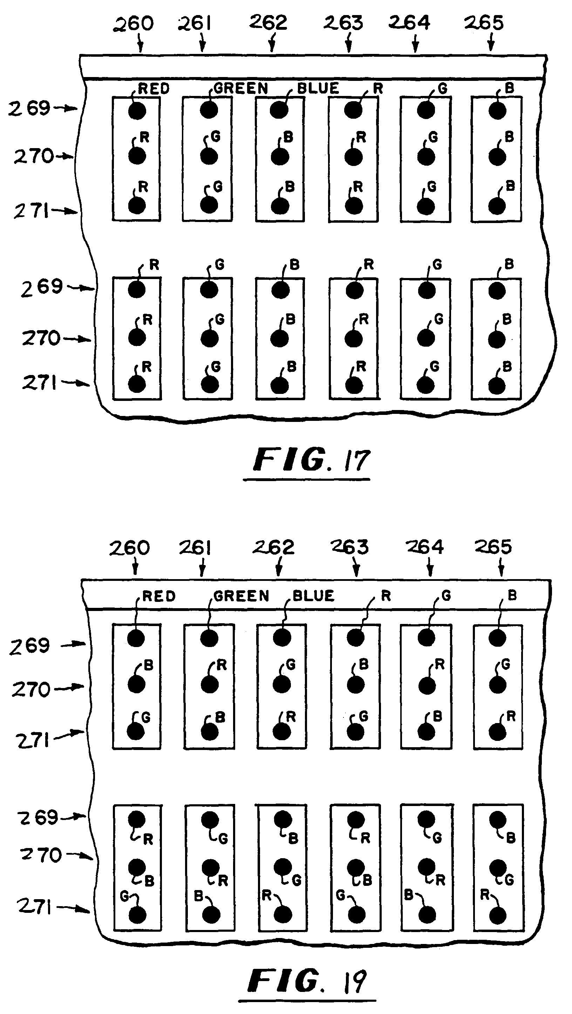

FIG. 17 is a magnified view of a section of an LCD illustrating how subregions of pixels can be illuminated by red, green, and blue light in a certain spatial pattern and in a certain temporal sequence.

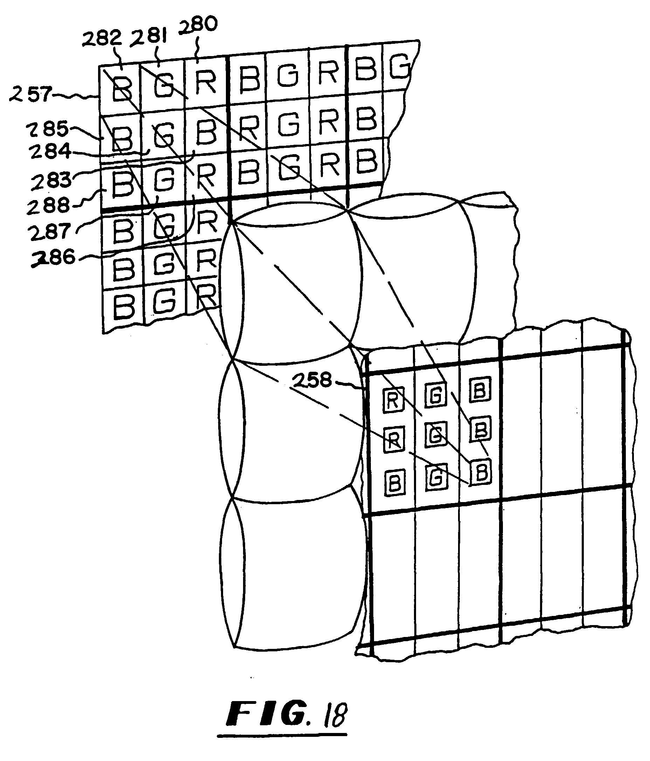

FIG. 18 diagrams an illumination system that can be used to create the spatial patterns and temporal sequence illustrated in FIG. 17.

FIG. 19 is a magnified view of an LCD showing an alternate spatial pattern of colored illuminated subregions that can be illuminated in a certain temporal sequence.

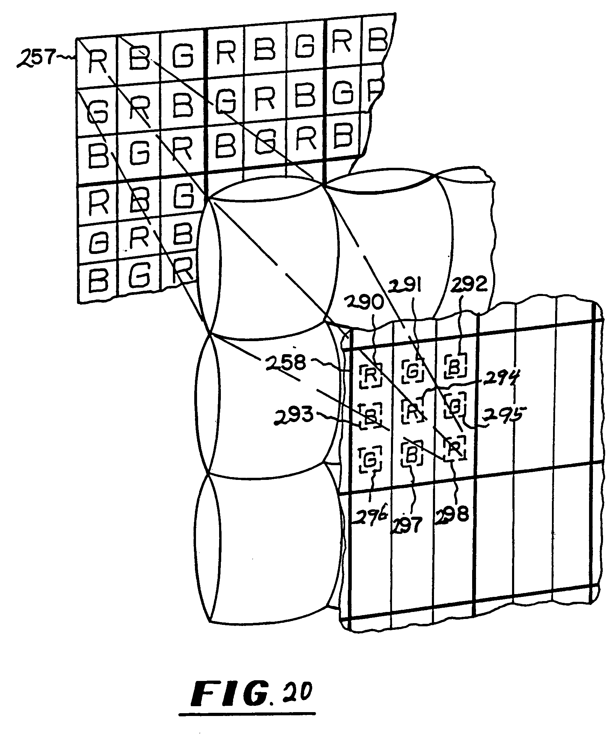

FIG. 20 is a drawing of part of an illumination system that can be used to create the spatial pattern and temporal illumination sequence shown in FIG. 19.

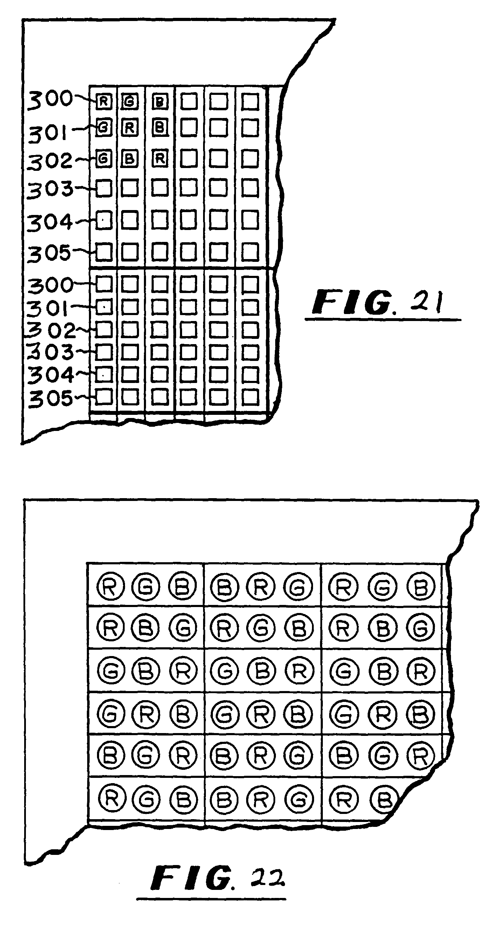

FIG. 21 is a magnified view of part of an LCD showing how a larger number of subregions in a certain spatial pattern can be illuminated within each pixel in a certain temporal sequence.

FIG. 22 is a magnified view of part of an LCD illustrating a larger spatial pattern of colored subregions within a larger number of pixels.

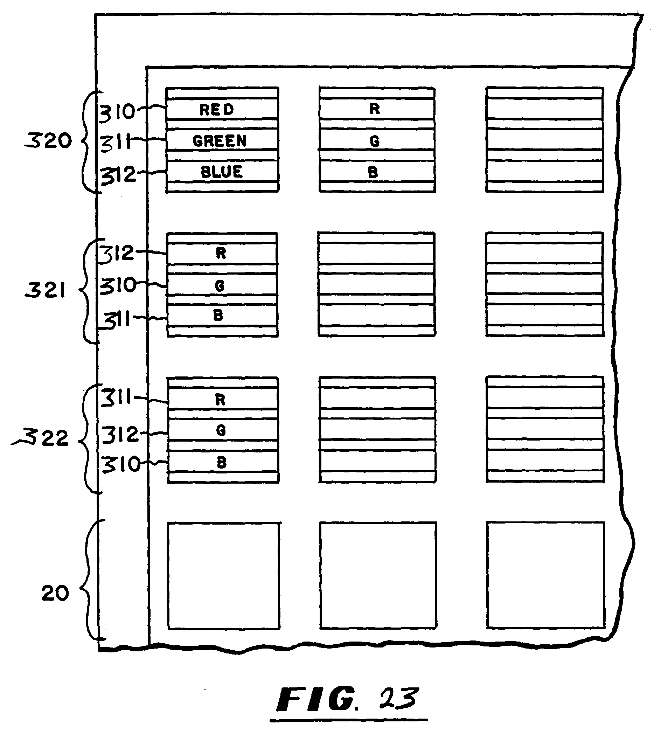

FIG. 23 is a magnified view of part of an LCD illustrating how linear subregions of pixels can be illuminated in a certain spatial pattern and in a certain temporal sequence.

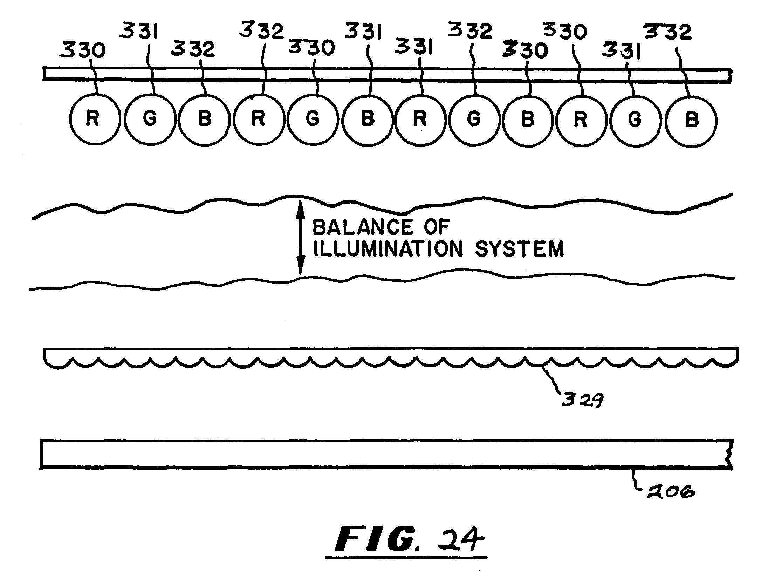

FIG. 24 is a magnified view of part of an illumination system that can be used to generate the pattern of FIG. 23.

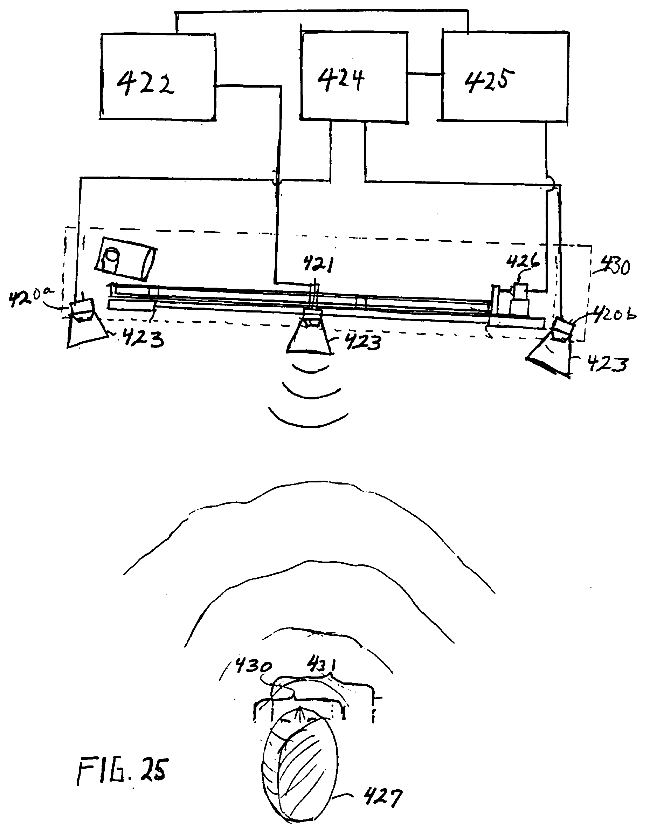

FIG. 25 is a top view of a head tracking system.

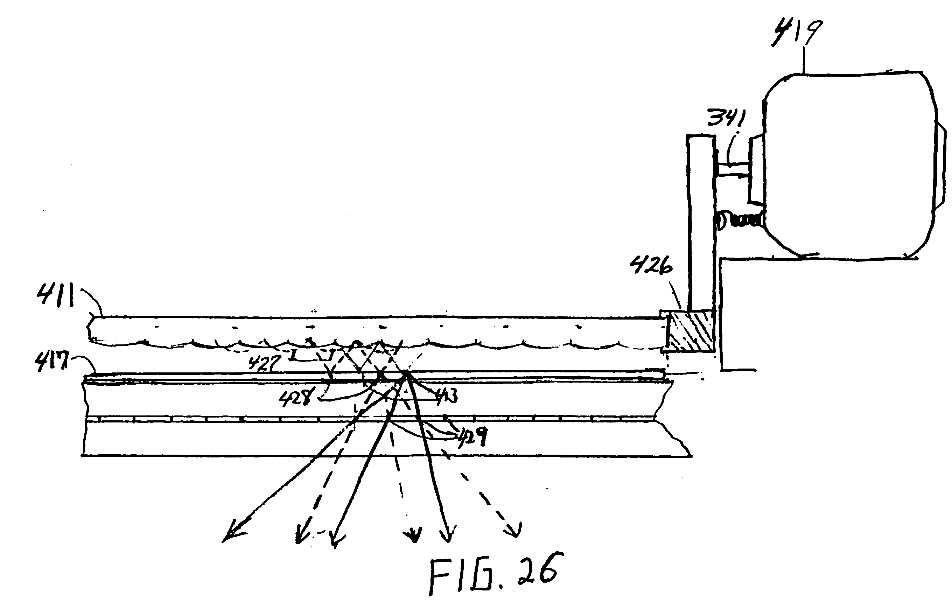

FIG. 26 is a close up of the lenticular lens of FIG. 6, with a slide mechanism and motor that can cause the lens, and thus the light lines and autostereoscopic viewing zones, to move sideways.

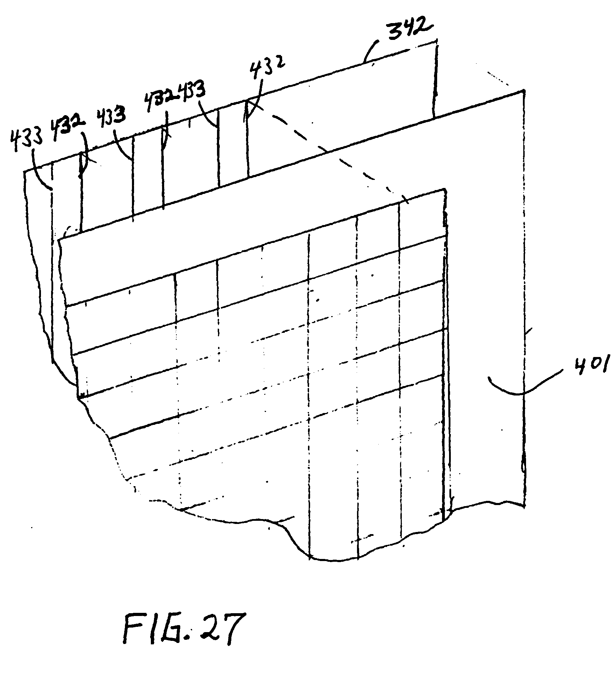

FIG. 27 is a light valve and illumination system that produces two independently controllable sets of lines, which can be used to cause viewing zones to move sideways without moving parts.

FIG.s 28a through 28c are a magnified view of how the embodiment of FIG. 27 looks to an observer's eye while the system is in use.

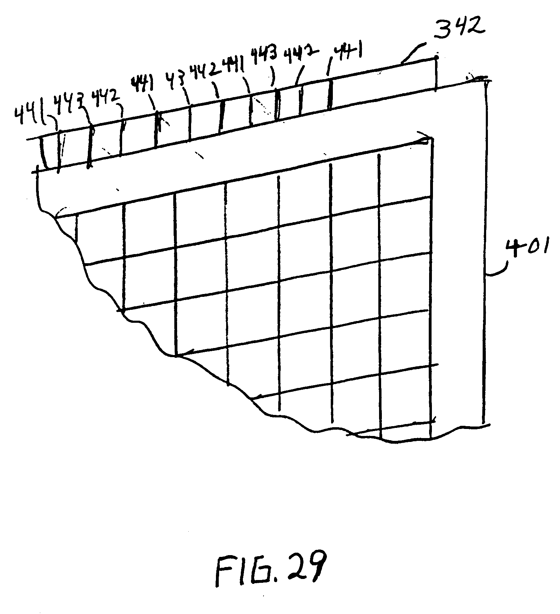

FIG. 29 is another specific embodiment that causes the viewing zones to move sideways using three sets of light emitting lines.

FIG.s 30a through 30c are a top view of the system of FIG. 29.

FIG.s 31a through 31c are a magnified view of how the embodiment of FIG. 29 looks to an observer's eye while the system is in use.

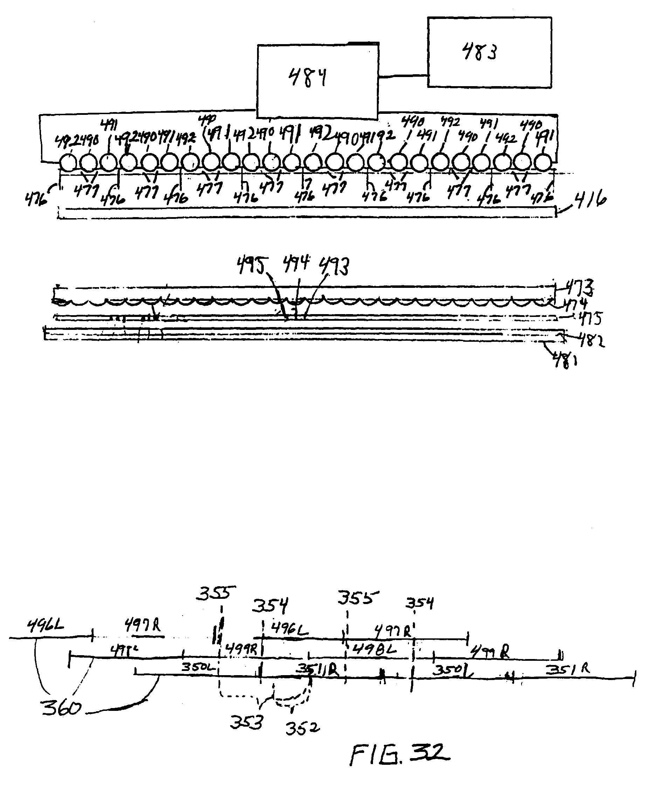

FIG. 32 is a top view showing the various viewing zones formed by the three sets of light lines shown in FIG. 29, and how they overlap.

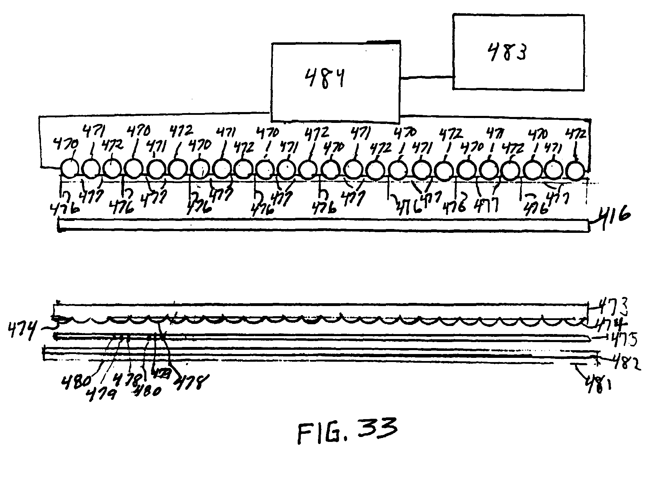

FIG. 33 is a top view of a variation of the illumination system, similar to that of FIG. 6, which can create more than one set of lines and cause the sets to independently turn on and off.

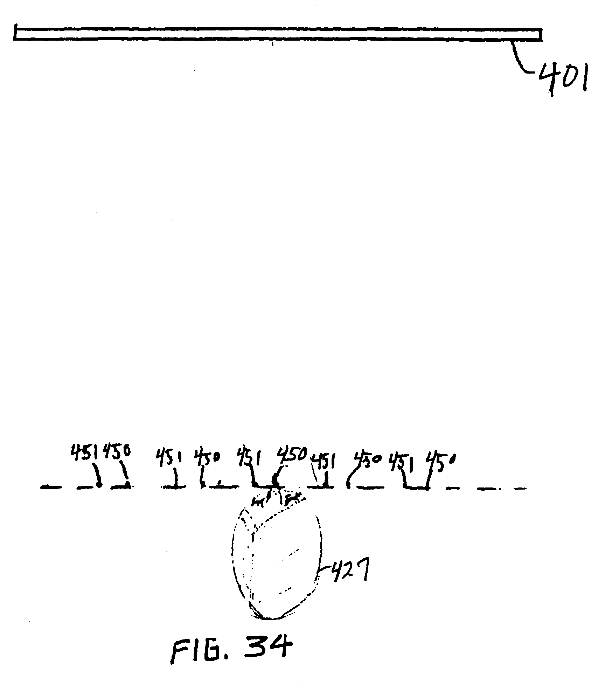

FIG. 34 illustrates how the head tracking system operates with a hysteresis feature added.

DESCRIPTION OF THE PREFERRED EMBODIMENTS

The basic concept of displays using the stroboscopic illumination systems object of this invention is explained with reference to FIG. 1 which depicts schematically a general configuration of autostereoscopic and 2-D displays incorporating the system. A two dimensional light valve array 6, such as a liquid crystal panel (LCD) or a similar imaging device, is used to generate images by electronically scanning the array 6 which is comprised of rows and columns of individual pixels. The operation of such imaging devices is well known to those skilled in the art. Information is inputted to the LCD 6 via an input 10 which is usually a ribbon cable.

The illumination of the LCD 6 is provided by the stroboscopic or non-stroboscopic light source means 3, which is described in its several versions in the following, can consist of several different types of light sources, some in combination with electro-optical shutters. The emitting regions of the light sources will generally be long, thin, and vertically oriented or will be small and point like, as described in US -A-5,036,385. Light source means 3 is controlled and driven by signals through input 9 from the electronic control module 1. Control module 1 receives its timing signals through input 8 and generates a sequence of light flashes appropriately synchronized with the generation of an image on LCD 6. In addition to light sources or combination of light sources and electro-optical shutters, the light source means 3 contains appropriate reflectors, mechanical supports, cooling means, and means for adjusting the position of said light sources to achieve a desired geometry of the illumination system. An opaque flat black non-reflective barrier 96 blocks the area between and to the sides of the light sources 3, so as not to allow light to exit the light source 3 or be reflected from the light source 3 from points other than the light source 3. Barrier 96 can be a flat black metal plate with slots or holes cut in its surface in front of the light source 3.

A system of baffles (not shown) consisting of opaque barriers extending out from the barrier 96 can be placed in the system to prevent light from light source 3 from reaching points on the lenticular lens far from the area directly in front of the light source 3. These barriers generally reduce the amount of scattered light in the system, and reduce the brightness of ghost images - that is, images intended for the right eye which seen faintly by the left eye and vice versa - which are caused by scattered light which strikes the diffuser 5 in the area between the light lines.

Optical means 4, such as a lenticular lens or fly's eye lens, focuses the light from said light source means 3 onto a weakly diffusing transparent panel 5, the purpose of which is to slightly broaden the angle from which these light lines can be seen though the LCD 6. The panel 5 typically consists of a clear substrate of a certain thickness, with a thin layer of diffusing material bonded to its rear most surface. A glass or plastic panel 7 with an antireflection (AR) thin film coating 11 on its front surface is disposed of in, or bonded to the front of the LCD 6 so as to reduce disturbing reflections from the ambient light sources.

This generic system, when certain details are added and when it is operated in different ways, can be used to create one or more sets of light lines or light points in different positions and control which of the sets of light lines or points is on at a given time, as are necessary for several advanced types of displays that are described in US-A-4,717,949, 4,829,365 and 5,036,385.

If only one set of steadily shining light source lines is used, the system can be used to generate the steadily shining vertically oriented light lines, or arrays of light points, behind an LCD, as described in US-A-4,717,949 and 4,829,365. This system will produce autostereoscopic images with less resolution than the LCD itself. In some embodiments it will also create certain position restrictions for an observer - the observer must position himself so that his eyes are located within certain viewing zones within which right eye and left eye images are seen.

If multiple sets of independently controllable, steadily shining light sources are used, with each set capable of being turned off and another turned on upon command of a device which senses the position of an observer's head, then the viewing zones within which the autostereoscopic images are seen can be made to move to follow the observer's head as it moves, thus removing the position restrictions associated with the devices described in US-A-4,717,949 and 4,829,365. The operation of this type of system is described in detail later in this application.

As described in detail in US-A-5,036,385, the doubling of the pixel resolution of a 3-D image generated using an autostereoscopic display is achieved by rapidly generating partial images on the LCD 6 and stroboscopically illuminating the appropriate section on LCD 6 in synchronism with the image generation using appropriate fast flashing light systems. In this manner it is possible to use the same sets of pixel columns to display left and right halves of the stereopair, thus doubling the resolution of the display, as compared to earlier schemes, e.g., see US-A-4,717,949. If said partial images are generated and illuminated at a rate above the fusion frequency of vision, no flicker is perceived.

The look-around capability in autostereoscopic displays, as described in US-A-5,036,385, makes it possible for the observer to sees the 3-D image from several perspectives, not unlike a hologram. To implement this function several images representing the different perspective views of the object or a scene are interlaced with one another and are scanned in sequentially into the LCD 6 and the stroboscopic illumination is synchronized such that the different perspective views appear in different viewing zones, so that as the head of the observer moves with respect to the screen of the display, appropriate views, corresponding to the perspective appear. Such images of actual scenes or objects can be generated in real time using a number of TV camera pairs, or computer-generated images can be presented using one of several available image rotation programs.

A similar approach can be used to increase the resolution of non-stereoscopic (2-D flat) images to several times beyond the physical pixel resolution of an LCD. In this case, different subsections of each pixel are sequentially illuminated, while each pixel varies its transparency to correspond to different sub sections of a high resolution image, such that a detailed total image can be observed because of vision persistence with resolution several times greater than the pixel resolution of the LCD 6. In this latter case, the light lines are so positioned with respect to the pixel columns in the LCD 6 that at any given instant the observer sees only a part of a given pixel. Thus, the complete high resolution image is built up sequentially but fast enough to avoid flicker.

Some of the choices of components available for use in the illumination system when used for these various display configurations are described below.

In the present embodiment of the autostereoscopic display 2 the light source 3 is a bank of aperture fluorescent lamps, i.e., a fluorescent lamp with a narrow transparent slit parallel to its major axis, internally scribed into the light-emitting phosphor. The configuration allows for very bright light to be emitted by the lamp through said slit.

In place of said fluorescent lamp a short filament incandescent lamp has been used in conjunction with a fiber optic device which converts the image of the short filament into a long line of light which is then directed in a similar manner onto said lenticular lens sheet.

Intense illumination, and consequently bright images, can be generated using linear gas filled arc stroboscopic lamps, such as xenon flash lamps, as the light sources 3 in the above described light line generation scheme. The stroboscopic lamps operate at a rate considerable above the fusion frequency threshold of human vision (24 - 30 Hz), so that no flicker is perceived. Gas filled DC arc lamps can also be used.

Another method of illumination is to use a very bright point like incandescent lamp situated at some distance behind the lenticular lens 4. This method of illumination produces exceptionally bright 3-D images.

Xenon flash lamps and light emitting diodes (LEDs) light sources have also been experimentally utilized.

Other possibilities for light sources for this illumination system are projection type cathode ray tubes (CRT), electro-luminescent and AC plasma display panels

The pixels on these types of displays generally can be made to emit their light in strobe fashion when addressed, and thus can be used as light sources for the type of illumination systems described in this application.

Because in the present autostereoscopic display referenced above one half of the pixel columns of the LCD are used to display one half of the stereopair, the resolution of 3-D images with this type of display is one half of the pixel resolution of the LCD.

A top view of an embodiment of the invention using two stroboscopic light sources is shown schematically in FIG. 2. Light sources 42, 43 have linear geometry and are operated sequentially in a stroboscopic mode. The light sources 42, 43 can be any of the types of light sources described above. Reflectors 40, 41 can be used to increase the intensity of light projected toward the front of the display.

The light lines required in this embodiment to make it possible for the observer to perceive an illusion of a full resolution 3-D image are generated by means of the lenticular lens 46 which is a large array of thin, evenly spaced cylindrical lenslets forming a part of a transparent substrate. The geometry of the illumination system is so designed that light source 42, when it is on, generates a set of vertical light lines of which two, B1 and B2, are indicated in the drawing, to the right of the centers of the lenslets 52; and source 43 generates a set of vertical light lines, A1 and A2, to the left of the center of the lenslets 52. Only one set of light lines can be seen at a time because these light sources 42 and 43 operate sequentially. More lamps can be used to generate multiple sets of light lines for the full resolution displays with look around capability.

The lenticular lens 46 is a transparent plate which has on its one surface an array of very narrow vertically disposed parallel cylindrical lenslets. The number of said lenslets is equal to one half of the number of pixel columns of LCD 6 or less. The fly's eye lens version uses a two dimensional array of spherical lenses of circular or square outline on the same type of transparent plate. It can be used to image thin, vertically oriented light sources into light lines or it can be used to image smaller, more point like light sources into light spots. The various means of illumination described above can be utilized with these lenses.

It is desirable in many applications to be able to switch between 3-D image display, in which each eye sees different pixels on the LCD, and 2-D image display, in which both eyes see all the pixels. A commercially available electrically controlled diffuser 44 is diffuse when 2-D images are being displayed. When 3-D presentation is desired, the diffuser 44 is actuated by applying a voltage via input 45 such that it changes its state from strongly diffusing to transparent thus changing the nature of illumination from the type of uniform, diffuse illumination as required for 2-D images to one in which the light sources 42 and 43 are imaged by the lenticular lens 46 to generate a lattice of light lines for 3-D imaging. Such diffusers are made by Polytronics and Raychem in the United States, and other companies overseas.

It is generally desirable that the lenticular lens 46 and electronically controlled diffuser 44 have anti reflective coatings on their front most and rear most surfaces, that any non diffusing surface of weakly diffusing transparent panel 47 has an anti-reflective coating, and that the rear most surface of the LCD has an anti reflective coating. As an alternative, the front most surface of diffuser 5 can be bonded to the rear most LCD surface with an optically clear bonding agent, achieving the same effect of greatly reducing reflections at these surfaces.

The lenslets 52 focus the images of the active parts of the light sources 42 and 43 on the weakly diffusing transparent panel 47, the purpose of which is to slightly widen the angle from which said light lines are visible to the observer, i.e., to widen the zone of observation and also make the brightness of the illumination appear to be more uniform across the display. In the case of 3-D autostereoscopic imaging, locating the diffuser at the plane where the lines are focused is the only placement that works well. However, in the 2-D high resolution imaging case, the light lines or spots will ideally be located at the liquid crystal pixel layer itself, which is in the middle of the LCD glass where typically no diffuser can be placed. In the 2-D case, good results in terms of even illumination can be obtained with a weak diffuser placed practically anywhere in the available space between a plane several millimeters in front of the light source and the front of the LCD. However, the viewing angle is broadened only if the diffuser is placed on the front of the LCD. In the case of 2-D high resolution imaging, one also has the option of focusing the light spots or points through the LCD pixels and onto a diffuser mounted in front of the LCD.

The observer sees the light lines through the LCD 53 which comprises a two-dimensional array of cells 50 filled with a liquid crystal substance, and sandwiched between two sheets of glass 54 and 55 which are coated with polarizing film 49 and 51. The driving signals to control image generation on said LCD 53 are fed though the input 56.

Most embodiments that move the viewing zones to follow the observer's head require multiple sets of steadily shining lamps. Such a system is described below.

FIG. 33 (another top view) shows how a lenticular lens and linear lamp arrangement can be used to produce two, three, or many sets of independently controlled light emitting lines. In FIG. 33 independently controllable sets of lamps 470, 471, 472 are spaced behind a lenticular lens sheet or fly's eye lens sheet 473 with lenticular lenses or fly's eye lens columns 474 parallel to the lamps and oriented in a vertical direction parallel to the lamps. A lenticular diffuser 475 is again placed at the distance from the lenses where light from lamps 470, 471, and 472 are focused, and at a certain distance behind the pixel layer 482 of LCD 481. Baffles 476, barriers 477, and anti-reflective coatings are again used to minimize scattered and reflected light. The lenticular lenses 474 image the light from lamps 470 - 472 onto the diffusion layer along different sets of lines 478 - 480, each set being at a different position on diffuser 475. The light from lamps 470 along lines 478, the light from lamp 471 along lines 479, and the light from lamps 472 along lines 480. By turning lamps 470 - 472 on and off independently, it is possible to cause light line sets 478 - 480 to independently turn on and off. Note that the number of different sets of light lines formed with this arrangement can be equal to the number of independently controllable sets of lamps. Although three sets of lamps and light lines are shown here, any number can, in theory, be used.

An electronic means 483 would be provided to turn one and only one lamp on at any given time through operation of lamp power supply electronics 484. In this embodiment of the invention, the electronics switch between the lamps according to information received from a observer's head position sensing device to be described. Electronic means 483 is typically a microprocessor based device that is capable of turning different lamps on and off according to input in the form of X, Y and Z Cartesian coordinate head position information. As before fluorescent lamps or arc strobe lamps would be ideal for this application.

This illumination system is, of course, not the only way to produce either single, stationary, sets of light emitting lines or multiple sets of light emitting lines in different locations that can be turned on and off independently. Other possible systems include the embodiments using a special side illuminated reflector plates described in US-A-5,040,878.

Other methods of producing different sets of light lines in different positions behind an LCD with light from different sources, as well as variations of the systems described above, will be apparent to those skilled in the art. For example, variations on the system described above include the use of a fly's eye lens array instead of the lenticular lens, and use of columns of point like light sources instead of linear vertical oriented light sources.

FIG. 25 illustrates a head tracking system that can be used with displays employing the illumination systems described above. As a representative example of a head position sensing device, three ultrasonic transducers 420a, 420b, 421 are positioned along the top of the display case 430 of FIG. 25. In practice, such position sensors are not limited to ultrasonic transducers. A number of different types of sensors can provide information on the head position, to be used by the mechanical or electro-optic methods described above to shift the position of the light lines. For example, the Polhemus Company makes an electro-magnetic sensor which, combined with an element that can be worn on the body or head, is capable of determining the location of the element to a high degree of accuracy. The Polhemus system is particularly effective in situations where a helmet is worn, since the element can be mounted unobtrusively on or within the helmet. Another type of sensor uses infrared light reflected off the head to determine the head's location, Origin Instruments makes such a sensor, which reflects infrared light off of a small reflective spot attached to the forehead or glasses. Another infrared system described by Pund in US-A-4,649,425, reflects light directly off the head and does not require the user to wear any reflective device. Those familiar with the art will be aware of other types of head position sensors and other variations of the types just described.

In the ultrasound system of FIG. 25, an electronic pulse generator 422 causes the middle transducer 421 to periodically send pulses of ultrasound into the environment. The other two transducers 420a, 420b mounted near the sides of the display, listen for return echoes. Generally, all the transducers will be located at the back of horn reflectors 423 to concentrate the outgoing beam in a forward direction, and shield the listening transducers 420a, 420b from sound coming from anywhere but the forward direction.

Upon receiving ultrasonic energy, receiving transducers 420a, 420b send a signal to electronic interface 424 whose amplitude is proportional to the intensity of ultrasonic wave being detected at any given moment. Electronic interface 424 contains a filter which notes the time at which the first signal above a certain intensity is received. This signal will be a signal from the closest point on the closest object to the transducers.

A computing device 425, such as a microprocessor, uses the times measured between the emitted pulse from the central transducer 421 and the received echo from the two receivers 420a, 420b to calculate the position of the object, presumably the observer's head 427, which is causing the echo. A variation of the ultrasound device places the central transducer 421 on a clip on device worn by the user, instead of mounting it on the display 430. This can be attached to the users clothing directly below the center of his or her face. The transducer 421 should ideally be powered by a battery so that no cords or other devices are needed between the observer 427 and the display or other power source.

All of the head position sensors described above have in common the ability to determine the position of the head 427 in at least one dimension namely the horizontal direction parallel to the screen surface. Ideally, the head position in the other two dimensions, forward and back from the screen, and vertically, can also be determined. The Polhemus device can determine head position in all three dimensions, and the Origin Instruments and Ultrasound device described can determine position in the Y (side to side, horizontal) and Z (toward and away from the display) dimensions. In certain situations it may be desirable to use more than one of such sensing devices in combination, in order to determine the observer's positions in all coordinates.

Information on the head's 427 position is used by the microprocessor 425 to change the position of the light emitting lines behind the display, thus causing the viewing zones to move sideways, to stay centered on the observer's head 427.

A method of accomplishing this with the illumination system shown in FIG. 6 is shown in the magnified view in FIG. 26. Here, a motor 419 is attached to a slide mechanism 426 within which the lenticular lens 69 of FIG. 6 is held. Signals from the microprocessor 425 cause the stepping motor 419 to extend or retract its shaft 341, causing the slide mechanism to move. As the slide moves, the illuminating lines 413 formed on the diffuser 417 move sideways relative to the pixels 404 on the LCD 401 (not shown), and the viewing zones shift position. For example, in FIG. 26 if the lenslets 412 are shifted to positions shown in dotted lines 427 the lines 413 shift from positions 413 to new or second positions 428, and the viewing zones move horizontally, as shown by the change in direction of the arrows from the light lines 213 through the boundaries 229 of the pixels 404 in the liquid crystal layer 417 of LCD.

The motor 419 used is ideally a stepper motor, but can also be a continuous motor with a reduction gear system which moves a shaft only a small amount per revolution of the motor armature.

The distance that the lines must shift in order for the viewing zones to follow a person's head 427 across a distance $D_h$ is equal to $S(D_h/Z)$, where S is the distance between the light lines and the image forming pixels, $D_h$ is the distance that the person's head moves, and Z is the distance from the person's head to the image forming pixel layer.

FIG. 26 illustrates a method of moving the line that requires moving parts. However, it is possible to perform head tracking without moving parts by using different sets of lines that turn on and off, using an illumination system similar to that shown in FIG. 33, which can form multiple sets of light emitting lines in different positions by turning lamp sets on and off as was described earlier. A head tracking system without moving parts has advantages over a moving parts system including superior ability to keep the zones positioned on the observers eyes, and superior reliability under adverse conditions such as the high gravity forces and vibrations encountered within an aircraft.

A method of doing this with two sets of lines is illustrated in FIG. 27. A surface, such as a diffuser 342, upon which two sets of light emitting lines 432 and 433 can be displayed is spaced behind LCD 401 as shown. Each set of lines can be turned on and off independently, and furthermore circuitry is provided to turn one set off whenever the other set is on and visa versa. Such independently controllable sets of light emitting lines can be formed by the lenticular lens arrangement of FIG. 33 if two independently controlled sets of lamps are used.

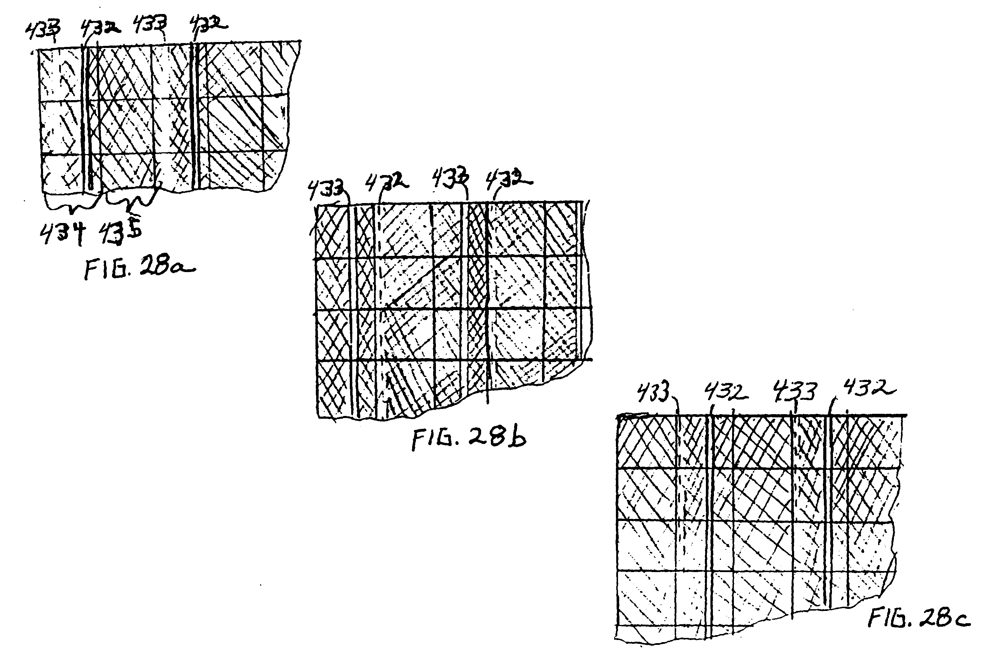

FIG.s 28a - 28c illustrate how the arrangement of FIG. 27 looks to the left eye of an observer sitting in front of the display. Light line set 432 is assumed to be on. As the observer moves to the right, line set 432 seems to get closer and closer to the boundary between the odd pixel columns 434 and the even pixel columns 435, as shown in FIG. 28a. At some point before the line appears to reach the boundary, line set 432 is turned off and line set 433 is turned on, as shown in FIG. 28b. Line set 433 is seen to still be well away from the pixel boundary, so the observer can continue moving to the right without crossing a zone. At some point after the line set 432 has crossed the boundary, but before line set 433 reaches the boundary, set 433 is turned off and set 432 is turned on again, as shown in FIG. 28c. Since line set 432 is now seen to be behind the even pixel columns by the left eye, the computer must simultaneously switch the left eye view image on the odd columns over to the adjacent even columns, and switch the right eye view to the odd columns. This can be accomplished by writing a new image with the right eye view on the even columns and a left eye view on the odd columns.

As the observer continues to move, it is possible to repeat the process illustrated in FIG. 26 as the lines appear to move across successive pixel columns. If the observer then moves to the left, the process is repeated in reverse.

FIG. 29 illustrates a light line illumination arrangement that can accomplish this process without an image flip when three or more lines are used. Here, three line sets 441, 442 and 443 are shown spaced on the diffuser 342 behind the LCD 401. Each set can be turned on and off independently. Furthermore, electronic means are provided to cause one set of lines to turn on at any given time.

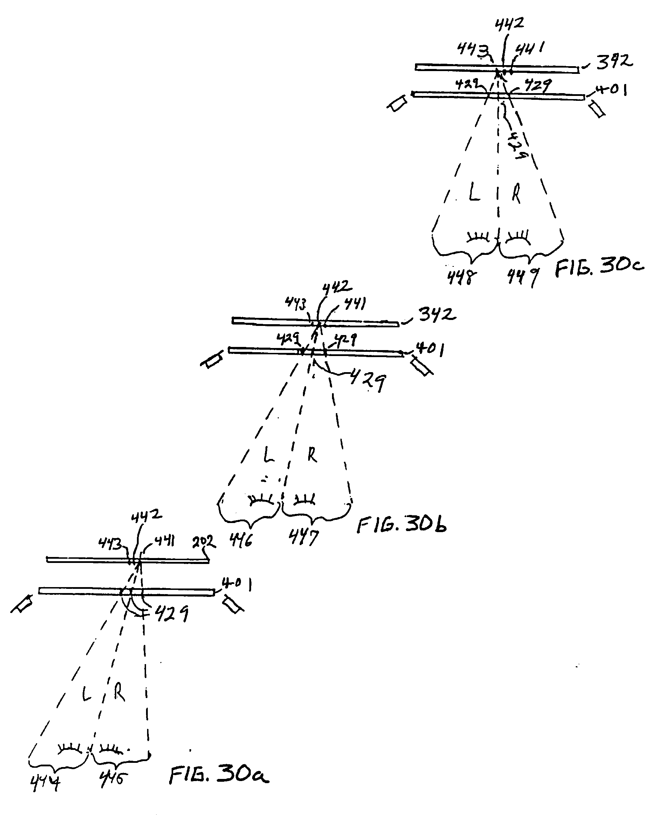

FIG.s 30a - 30c show how the viewing zones formed by the light lines in FIG. 29 move sideways as the light lines change position. When the lines 41 are on, the central left and right viewing zones are formed in positions 444 and 445, with the borders of the two central viewing zones defined by imaginary lines between the light lines and the boundaries 429 of the odd and even pixel columns of the light valve, as shown in FIG. 30a, according to the principles described in US-A-4,717,949. As described in that patent, there are a number of such zones spaced evenly across a plane parallel to the display. Only two are shown here for clarity. When lines 442 are on, the viewing zones move to positions 446 and 447 in FIG. 30b. When lines 443 are on, the zones move to positions 448 and 449 in FIG. 30c.

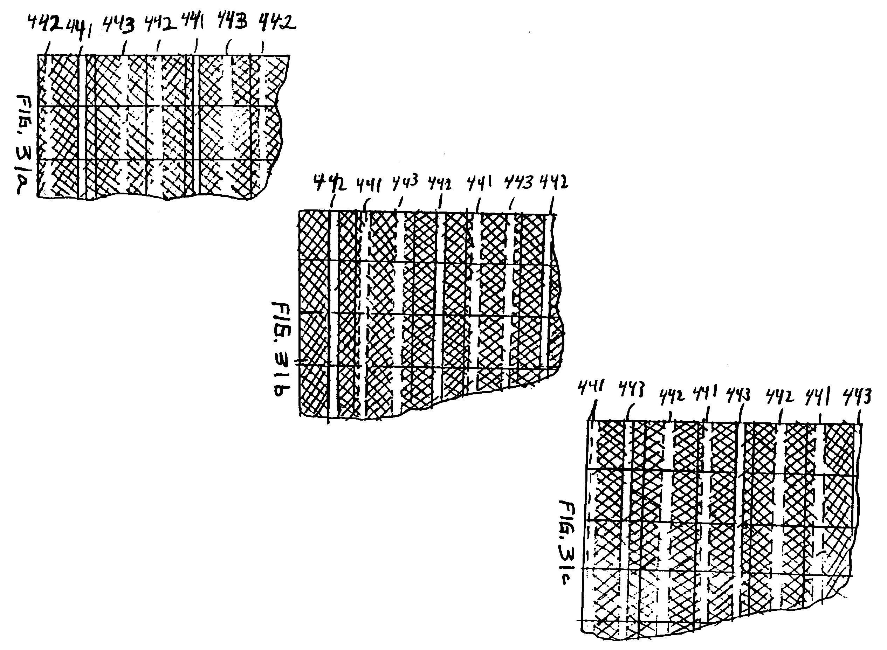

FIG.s 31a - 31c illustrate how this arrangement looks to an observer's left eye. Line set 441 is assumed to be on. As the observer moves to the right, line set 441 appears to approach the boundary between the pixel columns as shown in FIG. 31a. Before this occurs, set 41 is turned off and set 442 is turned on. As the observer continues to move, set 442 seems to approach the pixel boundary as shown in FIG. 31b. Before it crosses the boundary, set 442 is turned off and set 443 is turned on. As the observer continues to move, set 443 will eventually be seen to approach the boundary as shown in FIG. 31c. Before it crosses the boundary, set 443 is turned off and set 441 is turned back on. When set 441 is turned on again, the observer has moved so that his or her eyes are now in the two viewing zones adjacent to the central pair of zones where the observer started. This process can be repeated continuously as the observer moves, without any image flip between columns being necessary. If the observer moves to the left, the process can be repeated in reverse.

When more than three sets of light lines are used, the process is identical, with one light set coming on after its neighbor as the observer moves, except that since a larger number of light line sets with smaller space between them is used, more viewing zone positions are produced and the centers of the viewing zones can be more closely matched to the positions of the observer's eyes.

When only three sets of light lines are used, an image flip at every light line change may still be used to good effect, since it can allow the viewing zones centers to remain closer to the observer's eyes.

Use of an image flip with three lamp sets is illustrated in FIG. 32. Here, lamps 490, 491, 492 create light line sets 493, 494 495. In turn the light lines 493 shining through the LCD pixels create viewing zones 496, 497; light lines 494 create viewing zones 498, 499 and light lines 495 create viewing zones 350, 351. Each of the even numbered zones is assumed to be a left eye zone, and each of the odd numbered zones is assumed to be a right eye zone. They are marked in FIG. 32 with an "L" for left or "R" for right, respectively. Although the three sets of zones are shown to be spaced at slightly different distances from the display, this is only done to provide clarity. The horizontal lines 360, representing the ideal viewing plane where the zones are widest, are in reality coincident. The ideal viewing plane is explained in US-A-4,717,929.

When no image flip is used, the system will have to switch lamps when the observer's eyes are in regions such as region 352 where two left eye or two right eye zones overlap. These overlap regions are rather narrow. If, however, and image flip is used every time a lamp is switched, the switch can occur whenever the eyes are in wider regions 353, where left eye zones overlap with right eye zones. The overlap distance between these sets of zones is twice as large as the overlap between the others, as can be seen in the drawing.

Operation of the three lamp system with an image flip during observer movement is shown in FIG. 32. The observer's eyes are initially in zones 496, 497 and the observer is assumed to be moving left. As the eyes reach the horizontal positions 354, lamp set 490 turns off and lamp set 491 turns on, forming new zones 498 and 499. Normally, this would put the left eye in a right eye zone and vice versa, However, simultaneously, the images switch between columns, causing zones 498 to become right eye zones and zones 499 to become left eye zones, thus keeping the right eye image visible to the right eye and the left eye image visible to the left eye.

If the observer continues to move left, to the positions 355, lamps 491 now turn off and lamps 492 come on, causing the zones to move to positions 351 and 352. Once again, an image flip occurs. If the observer still continues to move, lamp set 491 can come on again when the eyes have reached point 356. By continuously turning the lamp sets on and off in the order 490, 491, 492, 490 .... and flipping the images between columns after every lamp change, one can cause the zones to track the observers eye positions as the observer moves to the left. If the observer moves to the right, the order of turn on and turn off of the lamps is reversed, and an image flip still occurs at every lamp switch. Note that the order in which the lamps turn on is the reverse order in which they turn on when no image flip is used with the three lamp system.

In any of the previous arrangements, if the observer stops at or near the location that causes the line sets to switch, the systems just described may cause the lines sets to switch on and off and the images to flip continuously. This will likely be annoying to the viewer. To prevent this problem, hysteresis can be introduced into the control system. This is illustrated in FIG. 34.

In FIG. 34, as the observer 427 moves to the right, there will be certain points, 450 which when crossed will cause the controller to switch line sets and or flip images. The controller can be programed so that, when the observer stops and moves back to the left, the switching back to the original state does not occur until the observer gets to the points 451. Thus if the observer stops at or near any of the points 450 or 451, a single line switch and or image flip will occur, and the system will stay in that state until the observer has moved a considerable distance one way or the other.

When the systems described above use an image flip between pixel columns, then it is desirable, when switching between one set of lamps and the next, to keep both lamps off during all or most of the short period when the pixels on the LCD are changing to flip the positions of the left and right eye images. Otherwise, a double image become visible for an instant, during the short time the pixels of the display are changing from one state to the next. If strobe lamps are used, the short time interval between lamp flashes can be timed to occur at the end of the address of the LCD, and be of such a length that the pixel complete all or most of their change by the time the next lamp flash occurs.

It is desirable in many applications to be able to switch between 3-D image display, in which each eye sees different pixels on the LCD and 2-D image display, in which both eyes see all the pixels. In a system with three or more sets of lamps, this can be accomplished simply be turning on all the lamps at once. With all the lamps on, light lines are seen behind all the pixels by each eye, and thus full resolution 2-D images can be viewed. A switch can be provided for this purpose. At one position, the switch allows only one set of lamps to be on at any given time. In the other position it turns all the lamp sets on. Note that if a large number of lamp sets are used, it is not necessary to turn on all of them in order for a light line to become visible behind every pixel. It is generally desirable, when turning on multiple lamp sets on for 2-D viewing, to turn down the power provided to each lamp, so that the overall brightness of the display remains roughly constant, even though many more lamps are on. The variable diffuser 416 of FIG.s 32 and 33 can also be used to good effect for 2-D viewing in a multiple lamp set system. If the variable diffuser is turned to its diffuse condition when multiple lamp sets are turned on for 2-D viewing, very even illumination will result.

With any of the multiple line set or mechanically moving line set methods described above, it is possible to add a so called look around feature through the use of the proper image generating software and interface between the software and the head track. When the observer is in a certain position directly in front of the screen, a stereoscopic image made up of two perspective views of some scene is shown on the screen. The actual images of the scene on the display surface are two projections of the points on the imaginary 3-D objects onto the screen surface along lines running between the points in imaginary space and the observer's two eye locations. The drawing of images in this way is well known to those familiar with the art of computer graphics as applied to stereoscopic and autostereoscopic displays.

As the observer moves sideways or back and forth, the computer continuously redraws the scene so that the perspective views are drawn as projections toward the observer's new eye locations. Thus, the observer will always see perspective views of the scene that are identical to the views that would be perceived of real objects in space as viewed from the observers current location. Thus the observer will be able to move her head to look around corners or behind objects and so forth, and perhaps more importantly, will always see a 3-D image with minimal distortion. This will greatly enhance the apparent realism of the scene. Origin Instruments sells a software package that performs this function on simple images when used with their infrared head position sensing system.

In some applications, however, a different scheme would be more desirable for elimination of the distortion in the image when seen from off axis. For example, in some avionics applications the pilot sees a representation of an imaginary path in the sky to follow, which extends from near the display out to infinity. If displayed in 3-D, this path will be seen as if through a small window at the display surface. Obviously, if the pilot moves his or her head to the side when the look around software described above is in use, all but the nearest parts of the pathway will disappear behind the edge of the window, as distant objects always do because of perspective. This would be very undesirable.

If no look around software of the type described is used, the image will stay the same on the screen and the observer will still be able to see all of it as he moves around, but it will appear to be distorted when viewed from all positions except one, as is well known to those familiar with stereoscopic display systems.

A much more desirable arrangement would be to use software that continuously redraws the image as projected to two eye points coincident with the pilot's eyes, as before, and simultaneously causes the scene image to rotate around an imaginary point at the center of the display in such a way that the same axis within the image space is always pointed at the spot between the observer's eyes. Thus, the pilot would always see an undistorted image of the pathway that seems to extend directly away into the distance, but does not become hidden behind the edges of the display. Note that with either system, the image redraws can be performed to accommodate observer movement along any direction, up and down, in and out as well as sideways, provided that the head position sensor provides information on the head position in these dimensions.

With any of the light line moving systems described above, it is desirable to provide a means by which an observer can initially position the viewing zones to center them precisely on his or her eyes when he or she is seated in the most comfortable position. This will correct for any erroneous positioning caused by variables such as posture, eye separation, echoes from headgear and the like. For this purpose, a switch may be provided, ideally located on the display case, and ideally being a spring loaded three position rocker switch. In the left position, the switch would cause a mechanical or electro-optic optic mechanism to take the actions necessary to shift the viewing zones to the left one step at a time. In the middle position, to which the switch would return when not pressed, nothing would occur - this would be a neutral position. When pressed into the right position, the switch would cause electrical connections which caused the light line repositioning system to move the lines to the left, thus moving the viewing zones to the right one step at a time.

When multiple users are observing the display, it will be desirable to turn the head tracker off, since the tracking schemes just described can only track and follow one person's head. The zone movements necessary to track this person's head will not be appropriate for the other users, since their heads will more than likely be undergoing different motions than the tracked user. Thus a switch should be provided to turn the head tracker on and off independently of the display.

In the head tracking systems described above it is desirable, but not absolutely necessary, to coordinate the lamp turn ons and turn offs with the completion of the LCD addresses necessary to form the next image or flip images between columns. However, in the full resolution 3-D, full resolution 3-D with look around, and increased resolution 2-D embodiments, it is critical that the turn on and turn off of various lamp sets be timed precisely in relation to the address and change of the pixels on the LCD. An explanation of this timing is provided here prior to a description of how the stroboscopic versions of the present illumination system work.

The timing sequence of LCD scan (during which all pixels are addressed), pixel transmittance changes to form the next image component, and light source turn on and turn off when a small number of lamps is used for full resolution 3-D imaging as in FIG. 2 is shown in FIG.s 3a - 3c.

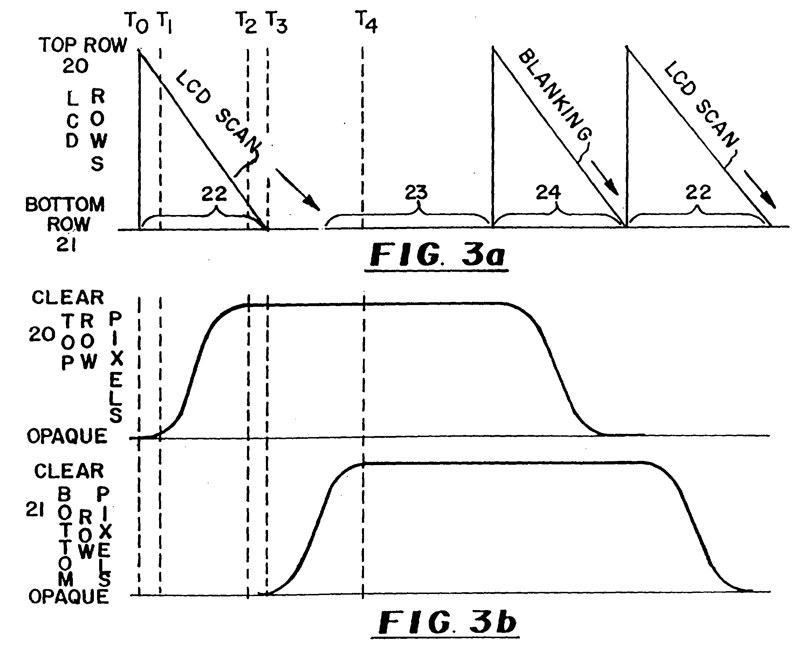

The timing diagram is shown in FIG.s 3a - 3c. FIG. 3a depicts the repeated address of LCD rows starting at the top row and proceeding to the bottom row. FIG. 3b shows the change from "off" or opaque state to "on" or clear state (or vice versa) of the first and the last pixels in a video field, after these pixels have been addressed, and the flashing of the first light emitting point or lamp 42 shown in FIG. 2. In the case of TFT and Ferroelectric LCDs, when a pixel is turned on during the scan of an LCD, it stays on until turned off, in this case until the scan of the entire LCD to display one video frame is completed, and the last pixels have had time to change their state.

As shown in FIG. 3a the time period between the start of one LCD scan and the start of the next is divided into three periods during which three actions occur: a first period 22 during which the LCD is scanned and its rows sequentially addressed usually starting at the top row 20 and ending at the bottom row 21 causing the pixels to change state in order to display the next image, a pause or waiting period 23 during which nothing happens, and an optional blanking period 24 of beneficial effect in some LCDs in which the LCD is scanned again and all the pixels are addressed and made to change state to either full on or full off depending on LCD configuration, to completely erase the previous image. Typically, all the pixels of a given row are addressed at the same time.

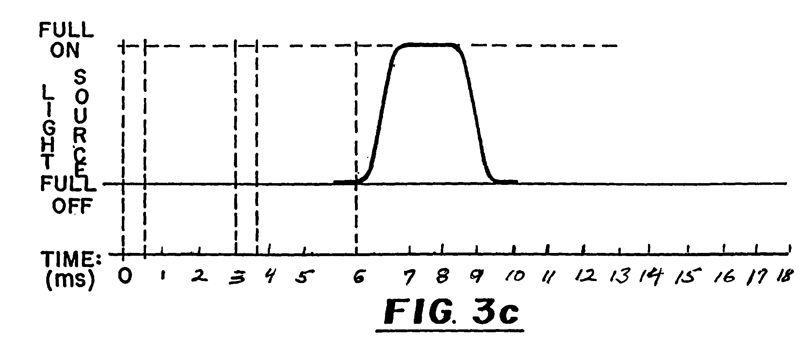

The signal to change the states of the first row pixels is given to the LCD 6 at time $t_0$. For illustrative purposes, it is assumed that a delay of about 3.5 ms occurs before the pixel completes its change to a new state in response to the applied signal - it begins to turn on at time $t_1$ and completes the change in its state between opaque and clear at time $t_2$ as shown in FIG. 3b. Although in FIG. 3b pixels are shown turning between full off and full on it is understood that typically some will be turning from on to off and others will turning between one intermediate gray state and another. The last pixel starts its state change at time $t_3$ after it is addressed at time $t_2$ and completes it at time $t_4$. At this instant the video frame is complete and the light source 7 flashes, as shown in FIG. 3c, thus transferring the information in the first field to the observer. As seen in FIG. 3a a pause period 23 during which no addressing of the LCD happens is inserted in order to give all the pixels time to change to their new state before the lamp is fired. If the time it takes a pixel to change state is long enough, or the time required for a scan is short enough, a second scan can occur during the pause period. During the second scan the same image information is transferred to the LCD as in the first scan. The optional blanking scan can then occur followed by the next address of the LCD during which the pixels are addressed in order to create the second image field. The sequence in the second frame is the same as in the first frame except that lamp 43 flashes. Likewise, the timing of events is identical in subsequent frames, the only difference being the information written to the LCD and which of the lamps flashes.

Again as shown in FIG.s 3a - 3c, the pixels take a certain period of time to change state once they are addressed. In this case 3.5 ms is shown for illustration, that being the period typical of a custom pixel LCD being made by an LCD development lab for Dimension Technologies Inc. The time required to turn off from full on may be different than the time required for full on to full off, or the time required to change between various intermediate gray levels. In such cases, the longest time period required to change between two states is most relevant, and must be accommodated so that all pixels, regardless of which states the change to or from, can complete their change before a lamp is fired.

Lamps, of course, never flash instantaneously, but rather emit light for a short time and then turn off. The duration that the lamp is emitting light depends on the lamp, and can be controlled with some lamps, such as LEDs. In general, the lamp should emit light only during the time period between the completion of the last pixel's change and the beginning of the next address scan. However, if a blanking scan is used, and the LCD is blanked to a dark state, the lamps may emit light during the blanking period without significant image degradation. However, if the LCD is blanked to the bright or transparent state, the lamps should stop emitting light before the blanking period begins. Otherwise, contrast will be lessened considerably.

A total of 16.7 ms has elapsed from the time the turn on signal has been applied to the first pixel to the completion of the change in state of the last pixel and flash of the light source, and blanking at all the pixels, and beginning of the next scan. Thus, there are 60 fields per second or 30 images (video frames) per second. This frame frequency will result in a nearly flickerless image in this particular configuration given typical screen sizes and brightness levels. Other configurations in which more than two sets of light lines or spots are created may require higher frame frequencies to avoid flicker. This scanning, changing, and flash sequence proceeds continuously, as subsequent image frames, each consisting of two sequential fields made visible to the observer by means of two lamp flashes, are displayed. The two image fields each consist of interleaved right and left eye members of a stereopair image as described in US-A-5,036,385.

FIG. 4 depicts the relation of the flashes of light sources 42 and 43 to the field generation on the LCD 53. As is shown, time is divided into periods numbered consecutively on the diagram starting with 1. During the odd periods, labeled 1, 3, etc., the LCD is scanned and all the rows of pixels are addressed. These correspond to the time period $T_0$ to $T_3$ in FIG.s 3a - 3c. The even periods, labeled 2, 4, etc., are waiting periods during which no addressing action is taken, and all the pixels on the LCD, including the very last ones addressed, are allowed to change to their new state after being addressed. These periods correspond to the time period $T_3$ to $T_4$ in FIG.s 3a - 3c. The spikes represent the flashes for light sources 42,43.

The two periods are shown as being roughly equal in FIG. 4, but the wait periods can be shorter or longer than the scan periods, depending on how fast the Liquid Crystal material in the LCD can change its state. If the periods can be equal, that is, if the LC material changes state in about the same amount of time as it takes to scan the LCD, then an extra scan can be performed during the even time periods, during which the information of the previous odd field is scanned onto the LCD a second time. This will result in a slightly brighter, more uniform image with greater contrast when a conventional TFT LCD is used. The reason for this is that charge slowly leaks across an LCD pixel cell after it changes state and is waiting for the next address, causing its transmittance to drop slightly during the remainder of the scan and wait periods. A second scan will cause the pixel transmittance to stop falling and return, at least partially, to its proper value by the time the lamp flashes.

By changing the distances between the light sources 30 and the lenticular lens 32 as indicated in FIG. 5, it is possible to vary the pitch between the light lines imaged on the weakly diffusing panel 33. It is also possible to adjust the width of the left and right eye viewing zones in this manner, to match the interpupillary spacing of the observer and provide the maximum amount of lateral head movement for that observer. In this way it is possible to adjust the illumination system to the pixel geometry on an LCD. In addition, by also varying the distance between the lenticular lens 32, said diffusing panel 33, and the LCD, it is possible to vary the best viewing distance from the LCD to the observer.

A version of the illumination system of FIG. 2 is illustrated as a top view in FIG. 6. In this system instead of two a plurality of light sources 61 through 68 are positioned such that each pair of light sources illuminates one vertical section of the lenticular lens 69. The light sources 61 through 68 can be fluorescent lamps or gas filled arc lamps, such as those filled with Xenon gas. Baffles 73 through 77 prevent light from one pair of the light sources shine on another section of the lenticular lens 69 other than the section in front of each lamp. The lenticular lens 69 images the light sources 61 through 68 on to the weakly diffusing panel 70 generating a lattice of thin, bright, vertical lines the purpose of which is as explained earlier. In this example, the column of the LCD pixels are addressed sequentially, during each field, starting with the left most column, and proceeding to the right most column.

Lamps 61, 63, 65 and 67 flash in sequence at predetermined intervals synchronized with the build up of one half of a stereopair image on the LCD 72. The first half image displayed during the first field is made up of the odd columns of the left eye image displayed on the odd columns of the LCD 72 and of the even columns of the right eye image, which are displayed on the even columns of the LCD 72, as is explained in US-A-5,036,385. After the section of the first half image in front of lamp 61 is generated, (i.e. the pixels in that section complete their change of state) light source 61 flashes, thus transferring the video information to the observer. The process is sequentially repeated by light sources 63, 65 and 67 until light source 67 flashes when the last pixel in the last section of the first half of the stereopair is addressed or changes its state. The second half of the stereo image is scanned in the same manner into the same set of pixels, thus achieving full resolution of the stereo image, and the set of light sources 62, 64, 66 and 68 flash in sequence and synchronism with the build up of the image on LCD 72 oriented as shown in FIG. 6.

The main advantage of this embodiment of this invention is that most of the wait period or pause period, where one is waiting for all the pixels, including the very last ones, to complete their change is shortened. Each of the smaller sections is illuminated as soon as the pixels within that section complete their change, which may occur while another part of the LCD is still being addressed. Indeed, if the pixels can complete their change in a period of time less that the interval between the address of the last column of their section and the next address of the first column of their section, the LCD can be addressed continuously, without any pause period between fields.

Although FIG. 6 shows eight light sources, it is understood that any number of light sources, constrained in their number only by the physical dimensions of the display and the dimensions of the light sources themselves, could be used in this illumination scheme.

Given the arrangement of FIG. 6, the lamps do not necessarily have to flash in a very short interval. They can remain on for the duration of the period between the time when the pixels of the last addressed column of section in front of them complete their change to the time when the pixels in the first addressed column are addressed again during the next scan.

It is possible to use essentially the same illumination system and timing sequence, as explained above, to generate 2-D images with resolution several times that of the pixel resolution of the LCD, given appropriate optics and light source configurations already known to those skilled in the art.

The forgoing diagram and explanation has used the case of an autostereoscopic full resolution display for illustrative purposes. This type of display requires two sets of interleaved light lines, each set positioned halfway between the member of the other set. The display generates two full resolution images, forming a stereo pair, that are visible from a series of left and right eye viewing zones spaced across a viewing region in front of the display. US-A-5,036,385 also describes a multiple perspective view full resolution display providing a look around effect, which generates several different full resolution perspective views of a scene, each of which is visible from within a different viewing zone, several of which are spaced across a viewing area in front of the display. This type of display relies on multiple sets of flashing light lines.

As an example, the arrangement and flashing sequence of FIG. 6 can be used to generate four sets of light lines for a four zone display if a total of 16 lamps were used instead of 8. The lamps are shown in FIG. 6A. Lamps 101, 105, 109, and 113 flash on as the first of four images (consisting of interleaved parts of four perspective views, as described in US-A-5,036,385) is built up on the LCD. Next lamps 102, 106, 110, and 114 would flash on in sequence as the next image is built up, then lamps 103, 107 111, and 115, would flash on as the third image is built up, then lamps 104, 108, 112, and 116 would flash on as the fourth image is built up.

As shown in FIG. 7 said LCD 72 is rotated 90 degrees against its commonly used orientation, i.e., its long dimension is vertical. This is called the "portrait format", and is useful in many applications. Because of this orientation the rows of pixels are used as columns and the columns are used as rows. The reason for this format is that all commonly available LCD drive circuits are designed to scan the LCD in a raster format, row-by-row; this configuration, consequently, takes advantage of this process.

Similar illumination systems can be used in a configuration of autostereoscopic and enhanced resolution 2-D displays in which the longer side of the LCD is horizontal, the so-called "landscape" format. Such a system is depicted in FIG. 8. A plurality of light sources 81 - 88 and 91, 92, etc. are also used in this scheme. However, in contrast to the illumination system described with reference to FIG. 6, light sources 81 - 88 do not extend over the entire height of the display, but are divided into vertical sections of equal heights. While FIG. 8 shows two such sections 81 - 88 it is understood that more than two sections could be used, constrained in their number only by the physical dimensions of the display and the physical dimension of the light sources. Said light sources can be fluorescent lamps or gas filled arc lamps, such as those filled with Xenon gas, operating in stroboscopic mode. Arrays of small lamps such as LEDs can be used to good effect, as can addressable flat panel emissive displays such as EL and plasma displays.

This illumination system operates as follows: the first half image is progressively scanned in on the LCD 95 starting with the top (first) row until in this case, the scan of the upper half of the LCD 95 screen is completed and the pixels in the upper half have made their change to form the image (the scan, meanwhile, can continue through the lower half of the LCD). At this instant light sources 81, 83, 85 and 87 flash, thus transferring the video information on the top half of the screen to the observer. The scan of the LCD 95 proceeds until the lower half of the screen is completed. As soon as the pixels on the lower half complete their change, the lower set of light sources 91, etc., is triggered to flash, causing the video information on the LCD 95 screen to be transferred to the observer. Now, the process is repeated in the identical manner for the next interleaved half image, using first the light sources 92, 94, 96, 98, then the light sources 92, etc., in this manner transferring the remainder of the image to the observer, and thus, because of the vision phenomenon of image retention, generating the illusion of a non-flickering full resolution three-dimensional image.

While the pixels of the lower half of the first half image are being allowed to change their state, the upper half of the next half image can begin to be scanned in. Again, if the pixels change their state fast enough so that all the pixels in each half have completed their change before the scan of the other half is complete, the LCD can be scanned continuously and no pause period will be required.

Lenticular lens 93 generates images of vertical light lines on the weak diffusing panel 94. In the configuration illustrated in FIG. 8 the light lines are about one half the height of the LCD 95. The height of the light lines in a particular display configuration depends on the number of sets of light sources, and thus the number of rows of light sources. Likewise, any number of columns might be used. The number of columns would be constrained only by the width of the lamps and the required width of the illuminating area.

This illumination system with different lamps and optics can be also used to generate enhanced resolution 2-D images by successively illuminating different subsections of the LCD, as described above. As an example of the 2-D case, FIG. 15 illustrates a lighting arrangement that could be used to increase the resolution of an LCD by a factor of 4, according to the principles explained in US-A-5,036,385.

FIG. 15 shows a configuration using an array 230 of a large number of light sources placed at a shorter distance behind the fly's eye lens sheet 211 and LCD 206. FIG.s 16a -16c is a timing diagram showing how lamps in different rows of the array are turned on and off in synchronization with LCD scans and pixel changes.

The array shown in FIG. 15 has 8 rows of light source groups 231 -238. Each group consists of four light sources 239 - 242. Each row of light source groups illuminates a horizontal section of the LCD 243 - 250 of roughly 1/8th the LCD's height. The LCD is assumed to be addressed row by row, starting from the top, as is typical of LCDs. Since each light source only illuminates a 1/8th horizontal section of the LCD, one must wait only for the pixels in a given 1/8th section to be addressed and complete their change before turning on the lamps behind it.

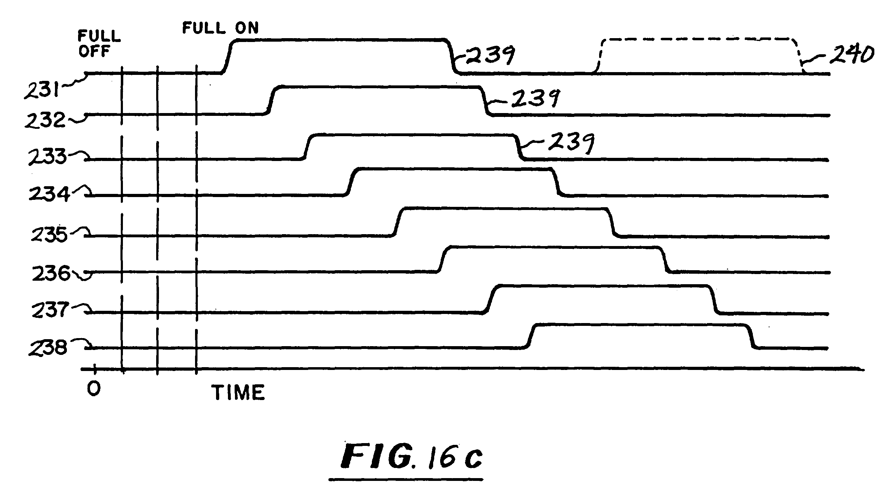

For example, in FIG.s 16a, 16b the address and pixel response of the last rows of sections 243 - 250 are shown. Again, the LCD is operated at 120 times per second, and the pixels take 3.5 ms to respond. As soon as the pixels of the last row of section one are through changing, the lamps marked 239 in the row of lamp groups 231 in FIG. 15 are turned on. Their brightness curve 231 is shown in FIG. 16c. They may remain on until the first rows of section 243 are addressed again, and start changing. FIG. 16c shows the lamps turning off at this point in time. The light from these lamps is imaged by the fly's eye lens into the upper left quadrants of each pixel. Likewise, as soon as the pixels of section 44 are through changing, the lamps 239 of row 232 are turned on. These, likewise do not turn off until the first row of section 44 is addressed again. The address and turn on sequence continues for section 245 - 250.

After the last section 250 is addressed, the scan can immediately proceed to address the LCD again, starting at the top. The lamps behind section 243, of course, will ideally turn off before the next scan of section 243 begins. After the first section 243 is addressed again, and its pixels have had a chance to change, lamps 240 in row 231 are turned on, providing illumination to the upper right hand quadrants of the LCD pixels of section 243. The remaining lamps 240 of rows 232 - 238 turn on in succession, as the pixels of the sections 244 - 250 in front of them complete their change to a new transparency state.

Likewise, on the next scan in the sequence, lamps 241 flash on and off, and then on the next scan after that the lamps 242 flash on and off. Thus, within four scans, a complete high resolution image is presented to the observer. During the next four scans, the next frame of the high resolution image is created in the same way using the same scan and lamp flash timing sequence shown in FIG.s 16a - 16c.

Although FIG. 15 shows four sets of light sources arranged in groups of four lamps each, it is understood that any number of light sources or groups of light sources, constrained in their number only by the physical dimensions of the display, the dimensions of the light sources themselves, and the address and pixel response speed of the LCD, could be used in this illumination scheme.

For the look around case, more lamp sets would again have to be used. A lamp arrangement capable of producing four sets of light lines is illustrated in FIG. 8A. The lamps are arranged in 16 columns of two lamps each. Here the top members of lamp columns 121, 125, 129, and 133 would flash on all at the same time after the top half of the first image had formed, and then the bottom members of lamp columns 121, 125, 129, and 133 would flash on when the bottom half of that image had formed. Likewise with the top and bottom members of lamp columns 122, 126, 130, and 134 would flash on as the second part of the image was formed, then the top and bottom members of lamps 123, 127, 131, and 135 as the third image was formed and finally the top and bottom members of lamp columns 124, 128, 132, and 136.

The image formation concepts, as explained with reference to FIG.s 2 through 8, can be implemented in a display configuration illustrated schematically in FIG. 9. The illumination system in this configuration does not employ flashing light sources; rather, the light sources 101 through 109 mounted on the base 100 are constantly lit. Such light sources, could be, preferably, fluorescent lamps. The light from said light sources is diffused by the strong diffuser 110 to produce homogeneous illumination of the electro-optical shutter array 111 preferably employing fast acting liquid crystal valves.

At the present time, typical shutters of this type will have low contrast when viewed from off angle. This means that when in the off state they do not efficiently block light that is passing though them at various high off axis angles. Baffles, similar to those shown in FIG. 2, can be employed to block this light and prevent it from scattering within the system and causing ghost images to be visible.

It is generally desirable, when the shutters employed are LC devices that require front and rear polarizers, to use linear polarizers whose polarization angles whose directions of polarization are in the vertical and horizontal directions. In that configuration, light blockage tends be most efficient at angles far from normal in both the vertical and horizontal directions, allowing the display to be viewed from far off axis in these directions without ghost images becoming a problem. It is desirable, of course, to also make the polarization directions of the front shutter polarizer and the rear LCD polarizer to be parallel, thus maximizing light transmission. It is also desirable, if the rear polarizer of the LCD is of optimal type for use with the shutter LC material, and if its polarization direction is vertical or horizontal, to leave off the front polarizer from the shutter, and simply rely on the LC rear polarizer to perform the light blocking function in the shutter off state. This results in slightly greater light transmission in the on state.

The on-off, i.e. clear and opaque, states of the individual shutters 115 through 124 etc., 131, 132 etc. of the electro-optical shutter array 111 illustrated in FIG. 9 are controlled in synchronism with the scanning of the LCD 114 and are turned on in a sequence, similarly to the sequence of light sources flashes in the display shown in FIG. 8. As scanning and pixel change on the LCD 114 proceeds from top to bottom, and completes 1/3 of the LCD's height, light shutters 115, 117, 119 and 121 are turned on momentarily allowing the light to pass to the lenticular lens 112 which generate the first set of light lines on the diffusing panel 113 and, consequently transfers the first part of the interleaved image to the observer. Next the second third of the one half of the image is scanned in and light shutters 123, etc. are turned on when this part of the image is scanned in, followed by the last third of the image.

While the pixels in the last third of the first half image are changing their state, the first third of the next half image can be being scanned into the upper third of the LCD 114 and transferred to the observer by momentarily turning on the shutters 115, 117, 119, 121. In this manner fast and efficient transfer of video information is achieved.

FIG. 10 depicts yet another illumination system for autostereoscopic and enhanced resolution 2-D displays. In this system a high intensity projection type CRT 190 is used to generate patterns of light lines or points in synchronism and an appropriate sequence with the scanning on the LCD 193. The light lines are projected onto a strong diffusing panel 192 by the focussing lens 191. The sequence of LCD scanning and light line generation can be as described with reference to the description of the illumination systems of FIG.s 2, 5, 7, 8 and 9, or another suitable sequence where the lines or points projected on to the diffuser 192 replace the lamps indicated in the figures. Stereoscopic or enhanced resolution 2-D images are generated as already described.

The system shown in FIG. 11 makes use of an electroluminescent or plasma panel 194 which has a predetermined pattern of addressable lines or pixels that are actuated in an appropriate sequence in synchronism with the scanning of the LCD 197. In some cases, customized EL or plasma displays of the type normally used for information display can be employed. As in previously described systems, a lenticular or fly's eye lens 195 images lines or points generated on the panels onto the weakly diffusing panel 196, and the stereoscopic or enhanced resolution 2-D images are produced as described above.

Yet another method of creating the illumination required for generation of stereoscopic or enhanced resolution 2-D images can take advantage of light emitting diodes (LEDs) as light sources. Such devices are increasingly commercially available in a variety of colors and with high brightness. FIG. 12 shows one version of a display utilizing LEDs.

A two-dimensional array 140 is comprised of a large plurality of LEDs 144, 145, 146 etc. Such LEDs can all be of one color, say, green, for monochromatic displays, or can be a set of three primary colors, red, blue and green, for color displays.

Since the brightness of blue LEDs is not as high as that of red and green devices, a greater number of blue LEDs could be used in each LED cluster in the LED array 140.

The LEDs can be discrete packaged devices mounted in a array on a base, or chips mounted on a suitable substrate.

The LEDs individually or in light-pattern on color generating sets are turned on and off in synchronism with the scanning of the LCD 143. The light generated by said LEDs is focused by the lenticular lens 141 onto the weakly diffusing panel 142 to form the light lines or points necessary for observation of stereoscopic or enhanced resolution images on the LCD 143.

For color displays, a sequence of red, blue and green components of the images can be generated on a monochrome LCD which are fused by the vision of the observer in to a color image, as described in US-A-5,040,878. As an example an optical configuration of an LED-based color illumination system for 2-D displays is depicted in FIG. 13 which shows a much enlarged partial perspective view of said system. Here also a monochromatic (black and white) LCD is utilized. As in the system explained with reference to FIG. 12, LED's which emit light of at least three primary colors are used. Such LEDs can be, for example, 174 (red), 175 (green), 176 and 177 (blue) (two blue LEDs to compensate for lower light output). Said LEDs direct its light output toward a fly's eye lens 178 which comprises a 2-D array of very small convex lenslets, such as lenslets 179 and 180. The number of said lenslets in said fly's eye lens 178 is equal to the number of pixels in the LCD 181. Hence, each lenslet focuses the light to one pixel in the LCD 181. When the pixels are in their on (clear) state (e.g. pixels 182 and 183) they transmit the light from the lenslets to a diffusing panel 184 where this light form color dots, such as 185 and 186. In this manner images can be formed on the diffusing plate 184. In order to achieve color in this display, red, blue and green constituent color images are displayed in a rapid sequence using the same pixels and the corresponding lenslets, by appropriately turning on and off sequentially sets of all LEDs of the same color, while scanning in into the LCD the corresponding constituent image.

Monochromatic LCDs can also be used in conjunction with other color light sources, such as fluorescent or gas filled plasma discharge lamps to generate color stereoscopic or enhanced resolution 2-D images. One embodiment of this scheme is illustrated in FIG. 14.

FIG. 14 depicts the top view of an autostereoscopic or an enhanced resolution 2-D display. Light sources 156 through 167 are mounted on the base 150. There are three sets each of four light sources; red 156 - 159, green 160 - 163, and blue 164 - 167. It is understood that the number of sets of light sources is not limited to four; such number will be only constrained by the physical dimensions of the display and the dimensions of the light sources. Fluorescent and gas filled plasma discharge lamps in three primary colors are readily commercially available.

The red, green and blue repeating flashing sequence, will, however, lead to the same type of image breakup phenomena seen in other field sequential color displays. It would also necessitate a much faster address speed and pixel response speeds for the LCD, as is the case with existing field sequential color systems. This is because in order to avoid flicker one would have to create a compete image every 1/60th as opposed to 1/30th second, as is the case with other field sequential color systems that illuminate the whole LCD first with red, then green, then blue light. That means that the LCD must be capable of generating 180 completely different images every second, so that, a red, a green, and a blue image component are presented every 1/60th second.

The illumination sequence used to overcome the image breakup phenomena relies on the ability of this invention's field sequential color illumination system to multiplex the illumination spatially as well as temporally. This ability should also allow one to operate the LCD and illumination system at much lower speeds - possibly as low as 30 complete images per second - without flicker becoming visible. The reason for this is that a line interlaced image can be created in which members of a set of three lines of red, green, and blue image elements is flashed sequentially.

Long ago, researchers discovered that cathode ray tubes (CRT) could be operated at 30 frames per second, instead of 60, without objectionable flicker, if an interlaced scanning system were used. In this scheme, which is used in ordinary home television sets, every other row is scanned in 1/60th second, and the remaining rows are scanned during the next 1/60th second. A complete image is built up in 1/30th second. This system allows flicker-free imaging at lower speeds because, although it takes 1/30th second for a full image to be built up, the eye still sees the screen filled with light during each 1/60th second interval. During successive intervals, the scan lines are shifting by a barely detectable amount.

This invention's system can achieve an interlace effect with field sequential color illumination. The system does this by focusing the red, green, and blue light into sequentially illuminated color spots or lines within the pixel boundaries. These lines, or rows of color spots, can be spatially and temporally interlaced in a manner similar to the scan lines of a CRT. The main difference is that to achieve the same resolution possible with other field sequential color systems, the interlace must be 3:1 instead of 2:1.

FIG. 17 shows one of several interlace configurations that can be generated with this type of optics. This particular pattern is closest to the typical CRT row interlace scheme and therefore good for illustrative purposes. The figure shows a magnified view of two representative rows of pixels on an LCD. During the first 1/90th second, the LCD is scanned and the pixels in columns 260, 263, 266, etc., are made to change their transparency to display part of the red component of an image. Pixels in columns 261, 264, 267, etc., are made to change their transparency to display part of the green component of an image, and pixels in columns 262, 265, 268, etc., are changed to display parts of the blue component of an image.

At the end of the 1/90th second period, when the pixels have had a chance to change, strobed illumination is focused into individual red, green, and blue light spots within the top third of each pixel 269.

During the second 1/90th second time period, the pixels of columns 260, 263, 266, etc., are changed to display another row of the red component of an image, the pixels of columns 261, 264, 267, etc., are changed to display the next row of the green component of the image, and columns 262, 265, 268, etc., are changed to display another row of the blue component of the image. At the end of this second 1/90th second interval, light is focused into a second row of spots 270 in the middle of each pixel.

During the last 1/90th second interval, the pixels once again change to display the remainder of the image, and strobed light would be focused into a new rows of spots 271 in the bottom third of each pixel.

Note that in this case each group of three red, green, and blue spots in each row is being used as a complete image pixel, in a manner similar to a typical color LCD with color filter stripes.

Note again the visual effect here would be similar to that seen on an interlaced CRT, except that instead of two sets of interlaced horizontal rows appearing sequentially, three rows would be used. With regard to flicker it is believed the results will not be significantly different from what is seen on a normal interlaced CRT with low persistence phosphors.

In this example, if the LCD had a pixel resolution of M (horizontal) by N (vertical), the resolution of the image would be M/3 x 3N - the total number of pixels would be the same in image and LCD, but the ratio of horizontal to vertical resolution would be different. It would be best in such a case to start out with pixels that had a high ratio (as shown) between their vertical and horizontal dimensions.

Another option, achieved by changing the way the data is placed on the LCD, is to let each pixel on the LCD to represent a pixel on the image. In such a case each pixel would represent one element of a M x N image, and would change its transmittance to reflect the intensity of red, green, and blue light at that point as the red, green, and blue light illuminated subregions of it.

It is not necessary for the red, green, and blue illuminating spots to be created in straight rows and columns. It is suspected that randomizing their placement to some degree would tend to improve performance with regard to image breakup even further. FIG. 19 shows such a randomized pattern and illuminating sequence. Rows 269, 270, and 271 are illuminated sequentially as described above, but note that the red, green, and blue areas are not in the same left right sequence in the three sets of rows.

FIG. 18 shows the type of illumination array 257 and fly's eye lens 258 arrangement that could be used to generate the light patterns shown in FIG. 17. FIG. 20 shows the type of illumination array 257 and lens 258 that can be used to generate the light patterns shown in FIG. 19. A fly's eye lenslet is configured so that each lenslet is situated behind a group of pixels where the entire repeating pattern is to be focused. For example, if the pattern repeats in every group of three pixels, as in FIG. 18, lenslets of roughly the same size as a group of three pixels must be used, and placed behind every group of three.

Arrays of red, green, and blue lights on the illuminator would be arranged in the same repeating pattern, except that the pattern would be inverted, as shown, relative to the patterns focused into the pixels, because of the inversion created by the lenses. The illuminating regions on the array and the lenslets would have the proper spacing and dimensions so that the lenses created images of the illuminating regions in the correct sections of the correct pixels.

As before, the elements of each set on the illuminator could be made to turn on and off sequentially from top to bottom, following the scan of the LCD. If the illumination of FIG. 18 had 8 rows of 3 x 3 patterns, 8 sections of the LCD would be illuminated sequentially. In the figure, the lamps 280, 281, 282 would turn on during the first scan, to illuminate the bottom 1/3 of each pixel. Lamps 283, 284, 285 would turn on during the next scan to illuminate the middle third of each pixel, and lamps 286, 287, 288 would turn on to illuminate the top third of each pixel.

Note that it is not necessary to illuminate the pixels sequentially by rows. It is also theoretically possible to illuminate light spots in different rows in different pixels at the same time. For example, in FIG. 20, one could illuminate first the areas 290, 291, and 298 at the same time, then the areas 293, 294 and 292 and next the areas 296, 297, and 295. The only requirement is that during any given illumination period, red, green, and blue illumination is on, and during each three period cycle all the areas within all the pixels are illuminated.

Although three rows of illuminated sub regions of each pixel are shown in FIG.s 17 and 19, that number can be greater than three. By using greater numbers of subregions, the color image created can posses a resolution greater than the pixel resolution of the LCD. FIG. 21 is a diagram showing six lines of subregions 300 - 305 within each pixel which are illuminated sequentially, starting rows 300 and proceeding through rows 305. Given an LCD with N x N resolution, this arrangement would produce a color image with N x 2N resolution.

Of course, if more subregions are used, a faster LCD must be used to avoid flicker, since more image sub components must be illuminated sequentially during the 1/30th second period. It is suspected, also, that as the number of subregions in each pixel increases, the overall frame speed, the time in which an entire image is built up, must be shortened. At the extreme end, a very large number of sequentially illuminated sub regions within large pixels may require a frame speed of around 1/60th second, since the visual impact will start to approach that of a non-interlaced CRT, which has to be operated at 60 fps to avoid flicker.

FIG.s 19 and 21 show 3 x 3 patterns of illuminated subregions of pixels. However, larger or smaller patterns can be used. FIG. 22, for example, shows a six by six pattern that can be repeated within groups of 6 x 6/3 = 6 x 2 pixels. One such group of pixels is encircled by the dotted line in FIG. 22.

In some situations, it may be desirable to use an illuminator consisting of a one dimensional array of linear light sources. The most common type of illumination used for LCDs, namely fluorescent tubes, are most often configured as long, thin tubes and cannot be made as small point like sources. Fluorescent tubes that emit red, green, and blue light can be made and easily mounted next to one another in banks. They can also be made to emit light in short bursts.

In the case of linear light sources, operating behind a typical LCD, it is best to mount them horizontally so that the members of each set can flash sequentially from top to bottom, following the scan of the LCD rows in front of it. Of course, if the LCD is scanned from side to side column by column, then the tubes should be mounted vertically.

An interlace pattern that can be produced with linear light sources and its illumination sequence are shown in FIG. 23. Red, blue and green horizontal lines are projected into each row of pixels as shown.

At the end of the first scan, after the pixels have been allowed to change to a new desired state, all the lines 310 are flashed simultaneously into the pixels. Thus, a red line is flashed into rows of pixels 320, a green line is flashed into rows of pixels 321 and a blue line is flashed into rows 322. Note that the RGB lines appear in different positions within the pixels. The pixels of rows 320 are, of course, in the appropriate states of transparency to form the red component of those rows of an image, correspondingly, the rows of pixels 321 are controlled to form the green component in those rows, and the rows of pixels 322 form rows of the blue component of the image.

After the LCD has been re-scanned and the pixels allowed to change their state again, a green line is flashed into the rows of pixels 320, a blue line into rows 321, and a red line into pixel rows 322. Again, pixels in each given row have the states appropriate to the color appearing in them. At the end of the next scan, after a new partial image has been generated on the LCD, a blue line is flashed into the pixel rows 320, a red line into the pixel rows 321, and a green line into the pixel rows 322.

The result is a full resolution, full color image in which the color lines are spatially interlaced.

FIG. 24, a side view, shows the lamp and lens arrangement that can be used to generate the line pattern and sequence of FIG. 23. A bank of linear lamps is mounted with red, green, and blue light emitting members placed vertically in the order shown. A lens sheet is mounted behind the LCD 206 as before, with its lenslets ideally of about one focal length away from the pixel layer. When using linear light sources, one has the option of using a lenticular lens 329 in place of the fly's eye lens discussed previously. A lenticular lens 329 is generally easier and less costly to make than a fly's eye lens of the same size. The lenticular lens would possess an array of cylindrical lenslets spaced across its surface, parallel to the length of the linear light sources. Such a lens is shown in FIG. 24.

In either case, each lens must image light into three pixels, although in some configurations the lens may image light into more than three pixels. The lenses and the light sources must be of the correct size and spacing relative to one another so that each lens images light from each set of red, green, and blue lamps into the correct pixels.

The lamps are turned on in the following order in succession, as soon the section of the LCD in front of them has been addressed and its pixels have completed its change to their required states. Each lamp turns off a certain time period after turn on, so that it is completely off by the time the next address occurs. The lamps 330 turn at the same time to form the first set of light lines 310. Lamps 331 turn on after the next scan and pixel change to form the lines 311. Lamps 332 turn on at the same time to form lines 312.

As can be seen from the previous discussion, there are many types of spatial patterns and temporal illumination sequences that can be generated using the type of illumination systems and timing just described. The present application should be understood to encompass these other arrangements.

Various types of flashing light sources can be used to provide illumination for the displays of this invention including fluorescent lamps, gas filled arc lamps, gas filled plasma discharge devices, light emitting diodes, electroluminescent devices, electron excited phosphor displays such as cathode ray tubes, plasma displays, fluorescent displays and various steady light sources with light transmission controlling means such as arrays of liquid crystal light valves placed in front of them.

The forgoing description has been for the purpose of illustration and not limitation. Many other modifications and ramifications will naturally suggest themselves to those skilled in the art based on this disclosure. These are intended to be comprehended within the scope of this invention.

**Claims**

1.    An autostereoscopic display (2) comprising a point like or linear light source (3) and, a light valve array (6), characterised by optical focusing means (4) having a transparent plate dispose between the point like or linear light source (3) and the light valve array (6), with one plane surface facing in one direction and an opposite surface having a plurality of lenses facing in the opposite direction, the focusing means (4) being spaced apart from and in front of said light source (3) so as to focus the light into array of lines, line segments, or point like areas on a plane substantially adjacent the light valve array, said focused light patterns illuminating selected portions of the light valve array (6).

2.    An autostereoscopic display as claimed in claim 1 in which the linear or point like light source (3) comprises a plurality of light sources (61 to 68).

3.    An autostereoscopic display as claimed in claim 1 in which the optical focusing means comprises a lenticular lens sheet (46, 52).

4.    An autostereoscopic display as claimed in claim 1 in which the optical focusing means comprises a fly's eye lens sheet (178, 211).

5. An autostereoscopic display as claimed in claim 2 having means for repeatedly addressing the light valve array in row by row or column by column fashion, there being a finite time period between the address of any individual light valve and the time that the valve has completed its change in transparency as a result of the address; further having means for timing the light source to turn on during the period between the time when the pixels that are in a section of the array generally in front of it have started their change in transparency, and the time when the pixels in said section are addressed again, the light source being turned off outside of these time periods.

6. A autostereoscopic display as claimed in claim 2 in which the light sources and optical focusing means are positioned with respect to one another and the light valve array in such a way as to create rapidly blinking sets of lines or points of light for the purpose of creating high resolution 3D images.

7. An autostereoscopic display according to claim 2 in which the light source (61-68) and optical focusing means (69) are positioned with respect to one another and the light valve array (72) so as to focus rapidly blinking sets of lines or points of light close to or within the pixel layer of the array so as to create 2D images with a resolution exceeding the pixel resolution of the light valve array.

8. An autostereoscopic display according to claim 2 in which mechanical means (73 to 77) is provided for adjusting the position of said light sources in relation to each other and in relation to the optical focusing means.

9. An autostereoscopic display according to claim 2 in which baffling means is provided between the light source and the optical focusing means so as to allow the light source to illuminate only the section of the light valve that is generally in front of it.

10. An autostereoscopic display according to claim 2 which includes an electrically controlled light diffusing means (44) placed between the light source (42, 43) and the optical focusing means (46), said diffusing means being capable of changing between a clear, transparent state and a light scattering, diffuse state under control of the user.

11. An autostereoscopic display according to claim 2 which includes a passive light diffusing means (5) between the light source (3) and a plane upon which the optical focusing means focuses the light and creates the light patterns.

12. An autostereoscopic display according to claim 11 in which the light diffusing means comprises a substrate (5) and a diffusing material bonded to a surface of the substrate.

13. An autostereoscopic display according to claim 12 in which the substrate comprises one or more sheets of transparent material, said sheets being mounted in contact with the rear most surface of the light valve on the side facing away from the observer.

14. An autostereoscopic display according to claim 10 further comprising optical antireflection means on surfaces of at least one of the optical focusing means (46), the electrically controlled light diffusing means (44) and between transparent components of different indices of refraction, or on surfaces between transparent components and air, so as to reduce reflections at these surfaces.

15. An autostereoscopic display according to claim 2 in which the light sources are comprised of steady light emanating means (101 to 109) and further comprising light transmission controlling means (115 to 124 etc, 131, 132 etc) placed between the light sources and the observer to achieve a stroboscopic effect.

16. An autostereoscopic display according to claim 15 in which said light transmission controlling means is an array of light valves (11).

17. An autostereoscopic display according to claim 2 in which said array of light valves are electrically controlled liquid crystal devices (50).

18. An autostereoscopic display according to claim 2 in which said light sources are of at least three different types (156-159, 160-163; 164-167), each type capable of emitting light of a different colour.

19. An autostereoscopic display as claimed in claim 2 including a non reflective, opaque barrier (96) adjacent said light sources, configured in such a way as to prevent light from passing through it except at the light source locations.

20. An autostereoscopic display as claimed in claim 2 in which mechanical means is provided for adjusting the position of said light sources in relation to each other and in relation to the optical focusing means.

21. The autostereoscopic display of claim 2 wherein the plurality of light sources (144 to 146, 174-176) includes at least two differently colored light sources, the display further comprising means for sequentially flashing the light sources such that during each flash, at least one of each color of the at least two differently colored light sources is flashed; and wherein the light valve array (143, 181) comprises individually controllable light valves each having adjustable transparency; and wherein the focusing means (141, 178) focuses each color of light onto or adjacent the array for illuminating each light valve with one color of light during each flash.

22. The display of claim 21 in which the focussing means comprises a planar array of one of lenticular lenslets (141) and fly's eye lenslets (178).

23. The display of claim 21 further comprising a non reflective, opaque barrier having a plurality of apertures adjacent said light sources, wherein each aperture is aligned with one of the light sources.

24. The display of claim 21 further comprising a light baffle located between the light sources and the focussing means such that each light source illuminates a section of a correspondingly aligned light valve.

25. The display of claim 21 further comprising passive light diffusing means (142) located between the focussing means and the light valve array.

26. The display of claim 21 in which the focussing means includes an anti-reflection coating on a surface thereof.

27. The display of claim 21 in which the light valve array is a liquid crystal display (143, 181).

28. The autostereoscopic display of claim 1 having (1) a screen surface upon which is displayed, or imaged, a number of sets of thin parallel vertical light emitting lines (478-480, 493-495), each set containing a multiplicity of said lines, the members of each set being located in the areas between the members of the other sets, and each set capable of being independently turned on and off, said surface remaining dark between said emitting lines, (2) a light valve array parallel (482) to and in front of said screen, said light valve having individual picture elements, arranged in a regular pattern across its surface, said pattern possessing vertical columns of said picture elements, there being at least two vertical columns of picture elements for each of said light emitting lines in each set of said lines, said light emitting line being located behind and between said elements and a lens array (473) interposed between the light source (470-472, 490-492) and the light valve array (482), so as to establish areas of space known to the art as "Viewing zones" (496 to 499, 350, 351) in front of the display, within which an observer's eye sees all the light lines of a given set behind either an odd or even set of pixel columns, (3) optionally said display is in color obtained by filtering light passing through said picture elements along said columns with filters of at least three colours, and (4) electronic means (483) to cause the left eye image or a stereoscopic image pair to be displayed on the odd or even columns of pixels, and the right eye image of a stereoscopic image pair to be displayed on the remaining columns of pixels; the display being characterized by:
- a. incorporating a sensing device (420a, 420b, 421, 424) capable of monitoring the position of the head of a person who is looking at the display, b. using information from this sensing device to determine which set of light emitting lines is on, and which set of picture information is displayed on the odd or even columns of pixels of the display; c. selecting which light line set is on and which set of information is displayed on which column of pixels according to which combination of line set and image display, thereby causing the left eye viewing zone formed at the observers location to encompass the position of the observer's left eye, and the right eye zones to encompass the position of the observers right eye.

29. An autostereoscopic display according to claim 28 wherein two sets of independently controlled light lines are produced the members of each set being substantially to the left or right of the center line halfway between the members of the other set.

30. An autostereoscopic display according to claim 29 wherein, as the observer's head moves horizontally left or right, with his or her eyes within the viewing zones created by one light line set, so that the observer's eyes approach the boundaries of the viewing zones, that light line set turns off and the other set comes on, so that the new viewing zones formed by the second set now encloses the observer's eye locations; and as the observer continues to move, and the eyes approach the zone boundaries formed by the second set, the second set turns off and the first set turns on again, and simultaneously the left and right eye image information is switched between the odd and even pixel columns, such that when the first set comes on again, left and right eye viewing zones are again positioned so as to enclose the observer's eye locations.

31. An autostereoscopic display according to claim 28 wherein the locus of the observer positions at which the light lines switch when the observer is moving to the right are to the right of the locus of positions where the light lines switch when the observer is moving to the left, so as to not cause the light line sets to switch rapidly when the observer is near a position where a change occurs.

32. An autostereoscopic display according to claim 28 wherein n sets of light lines are present, n being a whole integer greater than 2, and as the observer who's eyes are within the viewing zone moves to the left or right, with one light lines set on, defined as set one, and the as the observer's eyes move off center and thus approach the boundaries of the viewing zones, set one turns off and set two, generally being the next set in the direction opposite the observer's movement, turns on in order to create viewing zones that are more centered on the observer's eyes.

33. An autostereoscopic display according to claim 28 wherein three sets of light lines are present, and as the observer who's eyes are near the center of the viewing zones moves to the left or right, with one light lines set on, defined as set one, and the as the observer's eyes move off center and thus approach the boundaries of the viewing zones, set one turns off and set two, being the next set in the direction the same as the observer's direction of movement, turns on, while simultaneously the left and right eye images on the screen are switched between the odd and even columns, in order to create viewing zones more centered on the observer's eyes, so as to create left and right eye viewing zones which encompass the observer's left and right eyes, respectively.

34. The display of claim 21 in which each of the light valves comprises a subregion and further in which the focussing means further comprises means for illuminating the subregion of each of the light valves with light of a different colour.

35. An autostereoscopic display as claimed in claim 13 further comprising optical antireflection means on surfaces of the light diffusing means (5) and the transparent sheets of the substrate (7) and between transparent components of different indices of refraction, or on surfaces between transparent components and air, so as to reduce reflections at these surfaces.

36. The autostereoscopic display of claim 28 where as the observer moves and different line sets turn on, software simultaneously and continuously redraws the scene in successive frame so as to change the perspective of the left and right eye views on the screen in a manner which is dependent on the observer's current location.

37. The autostereoscopic display of claim 36 where the scene is redrawn so as to draw the scene with perspective seen from the observer's current eye positions, so that as the observer moves, the observer will always see the scene without appreciable distortion and can look around and over objects in the scene.

38. The autostereoscopic display of claim 36 where the scene is redrawn in such a way that the entire scene rotates around a point at or near the display surface in such a way that an imaginary line in image space running between the point of rotation and a point between the observer's eyes always stays positioned between the observer's eyes, so that the same perspective view of the image is seen by the observer without appreciable distortion as the observer moves.

39. The autostereoscopic display of claim 28 where all or more than one set of light emitting lines (493-495) can be turned on simultaneously so the light is seen behind every pixel by each of the observer's eyes, thus allowing the observer to easily see full resolution two dimensional images displayed on the light valve.

40. The autostereoscopic display of claim 28 where an ultransonic emitter (421) is worn by the observer (427), and two or more receivers (420a, 420b) are mounted at or near the display device (430), in order to obtain information on the observer's head position through triangulation.

41. The autostereoscopic display of claim 28 where a device (416) which can be changed from a diffuse to a transparent condition is placed in the optical path between the light line generating means and the light valve picture element layer in such a way that when the device is in a diffused condition, light from the light line generating means is diffused, so that diffuse, even illumination emanates from the variable diffusion device, so that light is seen behind every picture element by each of the observer's eyes, thus allowing the observer to easily see full resolution two dimensional images displayed on the light valve.

42. The autostereoscopic display of claim 41 where more than one set of light lines is turned on when the variable difffusion device (416) is in the diffuse state to improve the evenness of the illumination behind the light valve when it is used for two dimensional viewing.

43. The autostereoscopic display of claim 28 where the illumination system used to create the light lines comprises more than one set of linear light sources or point like light sources (470 to 472, 490 to 492) arranged in columns, each set being capable of being turned on and off independently of the others, a fly's eye or lenticular lens sheet (473) spaced apart from and in front of said light emitting sites so as to focus the light into arrays of lines line segments, or columns of point like areas, a non-reflective and opaque barrier (477) immediately in front of or between said light sources, configured in such a way as to prevent light from passing through it except at the light source locations, means to adjust the position of said light sources in relation to each other and in relation to the optical element, a passive thin layer of light diffusing means (475) upon which the optical element focuses the light and creates the patterns of light lines or columns of segment or points, and optical anti-reflection means on surfaces between transparent components of different indices of refraction, or on surfaces between transparent components and air, so as to reduce reflections at these surfaces, said illumination system causing different sets of light lines to appear behind the light valve by means of turning different sets of the linear or point like light sources on and off according to information provided by the head position sensing device.

44. The autostereoscopic display of claim 28 where the light lines are formed by more than one set of small linear light sources or columns of line segment or point like light sources spaced across the light line plane, and no lenticular lens or fly's eye lens is present.

45. The autostereoscopic display of claim 28 where the head position sensing device consists of an ultrasonic range finding device consisting of at least one emitter (421) and at least two receivers (420a, 420b) mounted at or near the display and allowing position determination of the observers head through triangulation, using measurements of the time required for ultrasonic impulses to travel from the emitter to the receivers.

46. The autostereoscopic display of claim 28 where the position of the observer's head is determined by means of an electromagnetic sensor mounted on the display, which measures the direction and orientation of a electromagnetic field emitted by an electromagnetic emitter mounted on the observers head or headgear.

47. The autostereoscopic display of claim 28 where the position of the observer's head is measured by means of an infrared emitter which illuminates the region in front of the display, and two infrared sensors which image the infrared light reflected from an observer's head or a reflective device positioned on the observers head or headgear.

48. The autostereoscopic display of claim 28 where the observers head position is determined by the use of infrared, ultrasound, or electromagnetic sensors working in combination.

49. An autostereoscopic display device as claimed in claim 1, in which the display device comprises (1) a screen surface upon which is displayed, or imaged, a multiplicity of thin parallel vertical light emitting lines (478,479,480,493,494,495), said surface remaining dark between said emitting lines, (2) the light valve array (482) being parallel and in front of said screen surface, said light valve array having individual picture elements arranged in a regular pattern across its surface, said pattern possessing vertical columns of said picture elements, there being at least two vertical columns of picture elements for each of the light emitting lines, said light emitting lines being located behind and between said elements and a lens array (473) interposed between the light source (470,471,472,490,491,492) and the light valve array (482), so as to establish areas of space known to the art as "Viewing zones" (496,497,498,499,350,351) in front of the display, within which an observer's eyes sees all the light lines behind either an odd or even set of pixel columns, (3) said display optionally being in color obtained by filtering light passing through said picture elements along said columns with filters of at least three colors, and (4) electronic means to cause the left eye image of a stereoscopic image pair to be displayed on the odd or even columns of elements, and the right eye view of the stereoscopic image pair to be displayed on the remaining columns of elements, the display device further characterized by:

a. incorporating a sensing device (420a,420b,421,424) capable of monitoring the position of a person who is looking at the display, and
b. using information from this sensing device to activate a movement device (426) and physically move the lens array horizontally in a direction opposite the direction of the observer's movement by such a distance that the left eye viewing zone moves to follow the observer in such a way that it continues to encompass the position of the observer's left eye, and the right eye zone also follows the observer in such a way that it continues to encompass the position of the observer's right eye.

50. The device of claim 49 wherein the illumination system used to create the light lines and cause the light lines to move comprises (1) light emitting sites which are multiple liner light sources or point like light sources (490 to 492) arranged in columns, (2) a fly's eye or lenticular lens sheet (473) spaced apart from and in front of said light emitting sites so as to focus the light into arrays of lines, line segments, or columns of point like areas, (3) a non-reflective and opaque barrier (477) immediately in front of or between said light sources, configured in such a way as to prevent light from passing through it except at the light source locations, (4) means to adjust the position of said light sources in relation to each other and in relation to the optical element, (5) a passive thin layer of light diffusing means (475) upon which the optical element focuses the light and creates the patterns of light lines or columns of segments or points, (6) an optical anti-reflection means on surfaces between transparent components of different indices of refraction, or on surfaces between transparent components and air, so as to reduce reflections at these surfaces, and (7) mechanical means (426) to move the lenticular lens sheet or fly's eye lens horizontally in a direction opposite the direction of the observer's head movement, according to information supplied by the position sensing device.

51. The display of claim 21 in which the light valve array comprises rows and columns of the light valves.

52. A method for image formation by field sequential color illumination employing a display, said display (2) comprising a light source (3) and a light valve array (6), and being characterized by optical focusing means (4) spaced apart from and in front of said light source so as to focus the light into an array of lines, line segments, or point like areas on a plane substantially adjacent the light valve array, said focusing light patterns illuminating a selected portion of the light valve array, said method being characterized by:

providing an array (258) of individually addressable light valves each having adjustable transparency;
providing a stroboscopic illuminator (257) including a set of light sources containing at least two subsets of light sources, each subset emitting a colored light different from colored light from the other subset(s) of light sources, for simultaneously illuminating the array of light from valves with light from each subset;
addressing each of the light valves prior to illuminating them to vary their transparency so as to modulate the intensity of the multicolored light to form part of a color component of the image; and
stroboscopically illuminating each of the light valves with light from each subset of light sources so that light of more than one color simultaneously illuminates different light valves for a finite time after they are addressed in such a way that each of the light valves is sequentially illuminated by light from each subset, whereby a high resolution composite color image is displayed by the light valve array.

53. The method of claim 52 further comprising the step of imaging the plurality of multicolor light sources on a passive diffuser located adjacent the array.

54. The method of claim 52 further comprising the step of imaging the plurality of multicolor light sources onto, or immediately adjacent, a plane containing the light valve array.

55. The method of claim 54 in which the step of imaging the plurality of multicolor light sources comprises focussing the light into patterns of one of lines, line segments and points.

56. The method of claim 55 in which the step of focussing the light into patterns comprises the step of selectively illuminating subregions of the individual light valves.

57. The method of claim 52 further comprising the step of repeatedly addressing the array in one of a row by row and a column by column sequence, in which there is a finite time period between the address of any of the light valves and the adjustment of the transparency of the light valve due to the address, further in which the multicolor light sources remain in an on state between the time when the light valves have completed their adjustment in transparency and when said light valves are addressed again.

**Patentansprüche**

1. Autostereoskopische Anzeige (2), aufweisend eine punktartige oder lineare Lichtquelle (3) und eine Lichtventilgruppierung (6), gekennzeichnet durch eine optische Fokussiereinrichtung (4) mit einer transparenten Platte, die zwischen der punktartigen oder linearen Lichtquelle (3) und der Lichtventilgruppierung (6) angeordnet ist, mit einer ebenen Fläche die in eine Richtung weist und einer entgegengesetzten Fläche mit einer Vielzahl von Linsen die in die entgegengesetzte Richtung weist, wobei die Fokussiereinrichtung (4) mit Zwischenraum vor der Lichtquelle (3) angeordnet ist, um das Licht in eine Gruppierung von Linien, Liniensegmenten oder punktartigen Bereichen auf eine im wesentlichen an die Lichtventilgruppierung angrenzende Ebene zu fokussieren, wobei die fokussierten Lichtmuster ausgewählte Abschnitte der Lichtventilgruppierung (6) beleuchten.

**2.** Autostereoskopische Anzeige nach Anspruch 1, in welcher die lineare oder punktartige Lichtquelle (3) eine Vielzahl von Lichtquellen (61 bis 68) aufweist.

**3.** Autostereoskopische Anzeige nach Anspruch 1, in welcher die optische Fokussiereinrichtung eine linsenförmige Linsenplatte (46, 52) aufweist.

**4.** Autostereoskopische Anzeige nach Anspruch 1, in welcher die optische Fokussiereinrichtung eine Fliegenaugen-Linsenplatte (178, 211) aufweist.

**5.** Autostereoskopische Anzeige nach Anspruch 2 mit einer Einrichtung zum wiederholten Ansteuern der Lichtventilgruppierung Reihe für Reihe oder Spalte für Spalte, wobei ein begrenzter Zeitraum zwischen der Ansteuerung irgendeines einzelnen Lichtventils und dem Zeitpunkt, wenn das Ventil seine Veränderung der Transparenz infolge der Ansteuerung abgeschlossen hat, besteht, des Weiteren mit einer Einrichtung zur zeitlichen Einstellung der Lichtquelle derart, dass sie sich während des Zeitraums zwischen dem Zeitpunkt, wenn die Pixel, die sich in einem Abschnitt der Gruppierung im Allgemeinen vor dieser befinden, mit der Veränderung ihrer Transparenz begonnen haben, und dem Zeitpunkt, wenn die Pixel in dem Abschnitt erneut angesteuert werden, einschaltet, wobei die Lichtquelle außerhalb dieser Zeiträume ausgeschaltet ist.

**6.** Autostereoskopische Anzeige nach Anspruch 2, in welcher die Lichtquellen und die optische Fokussiereinrichtung derart in Bezug aufeinander und auf die Lichtventilgruppierung positioniert werden, dass sie schnell blinkende Liniengruppen oder Lichtpunkte bilden, um hochauflösende 3D-Bilder zu erzeugen.

**7.** Autostereoskopische Anzeige nach Anspruch 2, in welcher die Lichtquelle (61-68) und die optische Fokussiereinrichtung (69) in Bezug aufeinander und auf die Lichtventilgruppierung (72) derart angeordnet sind, dass sie schnell blinkende Liniengruppen oder Lichtpunkte nahe oder innerhalb der Pixeischicht der Gruppierung fokussieren, um 2D-Bilder mit einer Auflösung zu erzeugen, die höher ist als die Pixelauflösung der Lichtventilgruppierung.

**8.** Autostereoskopische Anzeige nach Anspruch 2, in welcher eine mechanische Einrichtung (73 bis 77) vorgesehen ist, um die Position der Lichtquellen in Bezug aufeinander und auf die optische Fokussiereinrichtung einzustellen.

**9.** Autostereoskopische Anzeige nach Anspruch 2, in welcher eine Ablenkeinrichtung zwischen der Lichtquelle und der optischen Fokussiereinrichtung vorgesehen ist, um es der Lichtquelle zu ermöglichen, nur den Abschnitt des Lichtventils zu beleuchten, der im Allgemeinen davor angeordnet ist.

**10.** Autostereoskopische Anzeige nach Anspruch 2, welche eine elektrische Lichtstreueinrichtung (44) zwischen der Lichtquelle (42, 43) und der optischen Fokussiereinrichtung (46) einschließt, wobei die Streueinrichtung in der Lage ist, durch Bedienung des Benutzers zwischen einem klaren, transparenten Zustand und einem Licht streuenden, diffusen Zustand zu wechseln.

**11.** Autostereoskopische Anzeige nach Anspruch 2, welche eine passive Lichtstreueinrichtung (5) zwischen der Lichtquelle (3) und einer Ebene einschließt, auf welche die optische Fokussiereinrichtung das Licht fokussiert und die Lichtmuster erzeugt.

**12.** Autostereoskopische Anzeige nach Anspruch 11, in welcher die Lichtstreueinrichtung ein Substrat (5) und ein auf eine Fläche des Substrats gebundenes Streumaterial aufweist.

**13.** Autostereoskopische Anzeige nach Anspruch 12, in welcher das Substrat ein oder mehr Platten von transparentem Material aufweist, wobei die Platten in Berührung mit der hintersten Fläche des Lichtventils auf der vom Betrachter abgewandten Seite angebracht sind.

**14.** Autostereoskopische Anzeige nach Anspruch 10, des Weiteren aufweisend eine optische Antireflexionseinrichtung auf Flachen von zumindest entweder der optischen Fokussiereinrichtung (46), oder der elektrischen Lichtstreueinrichtung (44) oder zwischen transparenten Komponenten unterschiedlicher Brechungsindizien, oder auf Flächen zwischen transparenten Komponenten und Luft, um Reflexionen an diesen Flächen zu vermindern.

**15.** Autostereoskopische Anzeige nach Anspruch 2, in welcher die Lichtquellen aus einer konstantes Licht ausstrahlenden Einrichtung (101 bis 109) bestehen und des Weiteren eine Einrichtung zum Steuern der Lichtdurchlässigkeit (115 bis 124 usw., 131, 132 usw.) aufweisen, die zwischen den Lichtquellen und dem Betrachter angeordnet ist, um einen stroboskopischen Effekt zu erhalten.

**16.** Autostereoskopische Anzeige nach Anspruch 15, in welcher die Einrichtung zum Steuern der Lichtdurchlässigkeit eine Gruppierung von Lichtventilen (11) ist.

**17.** Autostereoskopische Anzeige nach Anspruch 2, in welcher die Lichtventilgruppierung elektrisch gesteuerte Flüssigkristallvorrichtungen (50) sind.

**18.** Autostereoskopische Anzeige nach Anspruch 2, in welcher die Lichtquellen zumindest von drei verschiedenen Typen (156-159, 160-163, 164-167) sind, wobei jeder Typ in der Lage ist, Licht von unterschiedlicher Farbe auszustrahlen.

**19.** Autostereoskopische Anzeige nach Anspruch 2, einschließend eine nicht reflektierende undurchsichtige Trennwand (96) neben den Lichtquellen, die derart gebildet ist, dass sie Licht daran hindert, sie zu durchdringen, außer an den Stellen der Lichtquellen.

**20.** Autostereoskopische Anzeige nach Anspruch 2, in welcher eine mechanische Einrichtung vorgesehen ist, um die Position der Lichtquellen in Bezug aufeinander und auf die optische Fokussiereinrichtung einzustellen.

**21.** Autostereoskopische Anzeige nach Anspruch 2, in der die Vielzahl von Lichtquellen (144 bis 146, 174 bis 176) mindestens zwei Lichtquellen unterschiedlicher Farbe einschließt, wobei die Anzeige des Weiteren eine Einrichtung zum sequentiellen Aufleuchtenlassen der Lichtquellen aufweist, so dass während jedem Aufleuchten mindestens eine Farbe von jeder Farbe der mindestens zwei Lichtquellen unterschiedlicher Farbe zum Aufleuchten gebracht wird, und in der die Lichtventilgruppierung (143, 181) einzeln steuerbare Lichtventile aufweist, von denen jedes eine einstellbare Transparenz aufweist, und in der die Fokussiereinrichtung (141, 178) jede Lichtfarbe auf die oder nahe der Gruppierung fokussiert, um jedes Lichtventil während jedes Aufleuchtens mit einer Lichtfarbe zu beleuchten.

**22.** Anzeige nach Anspruch 21, in der die Fokussiereinrichtung eine ebene Gruppierung von entweder kleinen linsenförmigen Linsen (141) oder kleinen Fliegenaugenlinsen (178) aufweist.

**23.** Anzeige nach Anspruch 21, des Weiteren aufweisend eine nicht reflektierende, undurchsichtige Trennwand mit einer Vielzahl von Öffnungen neben den Lichtquellen, wobei jede Öffnung auf eine der Lichtquellen ausgerichtet ist.

**24.** Anzeige nach Anspruch 21, des Weiteren aufweisend ein Lichtablenker, der sich zwischen den Lichtquellen und der Fokussiereinrichtung befindet, so dass jede Lichtquelle einen Abschnitt eines entsprechend ausgerichteten Lichtventils beleuchtet.

**25.** Anzeige nach Anspruch 21, des Weiteren aufweisend eine passive Lichtstreueinrichtung (142), die sich zwischen der Fokussiereinrichtung und der Lichtventilgruppierung befindet.

**26.** Anzeige nach Anspruch 21, in der die Fokussiereinrichtung auf einer ihrer Flächen eine Antireflexionsschicht aufweist.

**27.** Anzeige nach Anspruch 21, in welcher die Lichtventilgruppierung eine Flüssigkristallanzeige (143, 181) ist.

**28.** Autostereoskopische Anzeige nach Anspruch 1 mit (1) einer Bildschirmfläche, auf welcher eine Anzahl von Gruppen von dünnen parallelen vertikalen Licht ausstrahlenden Linien (478-480, 493-495) angezeigt oder abgebildet ist, wobei jede Gruppe eine Vielfalt der Linien enthält, wobei sich die Bestandteile jeder Gruppe in den Bereichen zwischen den Bestandteilen der anderen Gruppen befinden und jede Gruppe unabhängig ein- und ausgeschaltet werden kann, wobei die Fläche zwischen den ausstrahlenden Linien dunkel bleibt, (2) einer Lichtventilgruppierung (482) parallel zu und vor dem Bildschirm, wobei das Lichtventil einzelne Bildelemente aufweist, die in einem gleichmäßigen Muster über dessen Oberfläche verteilt angeordnet sind, wobei das Muster vertikale Spalten der Bildelemente enthält, wobei für jede der Licht ausstrahlenden Linien in jeder Gruppe der Linien mindestens zwei vertikale Spalten von Bildelementen vorhanden sind, wobei sich die Licht ausstrahlende Linie hinter und zwischen den Elementen und einer Linsengruppierung (473), die zwischen die Lichtquelle (470-472, 490-492) und die Lichtventilgruppierung (482) eingeschoben ist, befindet, um vor der Anzeige Raumbereiche, die in der Technik als „Sichtfelder" (496 bis 499, 350, 351) bekannt sind, zu erzeugen, innerhalb derer das Auge eines Betrachters alle Lichtlinien einer gegebenen Gruppe hinter entweder einer ungeradzahligen oder einer geradzahligen Gruppe von Pixelspalten sieht, (3) wobei gegebenenfalls die Anzeige in Farbe ist, erhalten durch Filtern von durch die Bildelemente entlang der Spalten hindurchgehendem Licht mit Filtern in mindestens drei Farben, und (4) einer elektronischen Einrichtung (483), um das Abbilden des Bildes für das linke Auge eines stereoskopischen Bildpaars auf die ungeradzahligen oder geradzahligen Spalten von Pixeln zu veranlassen und das Abbilden des Bildes für das rechte Auge eines stereoskopischen Bildpaars auf die restlichen Spalten von Pixeln zu veranlassen, wobei die Anzeige des Weiteren durch folgende Merkmale gekennzeichnet ist:

a. das Einrichten einer Fühlvorrichtung (420a, 420b, 421, 424), die in der Lage ist, die Position des Kopfes einer Person, die die Anzeige betrachtet, zu überwachen, b. das Verwenden von Informationen aus dieser Fühlvorrichtung zum Bestimmen, welche Gruppe von Licht ausstrahlenden Linien eingeschaltet ist und welche Gruppe von Bildinformationen auf den ungeradzahligen oder geradzahligen Pixelspalten der Anzeige angezeigt wird, c. das Auswählen, welche Lichtliniengruppe eingeschaltet ist und welche Gruppe von Informationen auf welcher Pixelspalte und gemäß welcher Kombination von Liniengruppe und Bildanzeige angezeigt wird, wodurch das Sichtfeld des linken Auges, das an der Position des Betrachters gebildet wird, veranlasst wird, die Position des linken Auges des Betrachters einzuschließen, und die Zone des rechten Auges veranlasst wird, die Position des rechten Auges des Betrachters einzuschließen.

29. Autostereoskopische Anzeige nach Anspruch 28, in der zwei Gruppen von unabhängig voneinander gesteuerten Lichtlinien erzeugt werden, wobei sich die Bestandteile jeder Gruppe im wesentlichen links oder rechts der Mittellinie auf halbem Weg zwischen den Bestandteilen der anderen Gruppe befinden.

30. Autostereoskopische Anzeige nach Anspruch 29, in der, wenn sich der Kopf des Betrachters, dessen Augen sich innerhalb der von einer Lichtliniengruppe gebildeten Sichtfelder befinden, horizontal nach links oder rechts bewegt, so dass sich die Augen des Betrachters den Rändern der Sichtfelder nähern, sich diese Lichtliniengruppe ausschaltet und die andere Gruppe sich einschaltet, so dass die neuen von der zweiten Gruppe gebildeten Sichtfelder nun die Positionen der Augen des Betrachters einschließen, und wenn sich der Betrachter weiter bewegt und die Augen sich den von der zweiten Gruppe gebildeten Rändern der Zone nähern, sich die zweite Gruppe ausschaltet und die erste Gruppe erneut einschaltet, und gleichzeitig die Bildinformationen für das linke und das rechte Auge zwischen den ungeradzahligen und den geradzahligen Pixelspalten hin- und herwechselt, so dass, wenn sich die erste Gruppe wieder einschaltet, die Sichtfelder des linken und des rechten Auges erneut so positioniert werden, dass sie die Positionen der Augen des Betrachters einschließen.

31. Autostereoskopische Anzeige nach Anspruch 28, in welcher die Stelle der Positionen des Betrachters, an der die Lichtlinien wechseln, wenn sich der Betrachter nach rechts bewegt, sich rechts von der Stelle der Positionen befinden, an der die Lichtlinien wechseln, wenn sich der Betrachter nach links bewegt, damit die Lichtliniengruppen nicht schnell wechseln, wenn sich der Betrachter nahe einer Position befindet, an der eine Änderung auftritt.

32. Autostereoskopische Anzeige nach Anspruch 28, in der n Gruppen von Lichtlinien vorhanden sind, wobei n eine ganze Zahl größer als 2 ist, und in der, wenn sich der Betrachter, dessen Augen sich innerhalb der Sichtfelder befinden, nach links oder rechts bewegt, wobei eine Lichtliniengruppe eingeschaltet ist, die als Gruppe 1 definiert ist, und wenn sich die Augen des Betrachters außerhalb des Zentrums bewegen und sich somit den Rändern der Sichtfelder nähern, sich Gruppe eins ausschaltet und Gruppe zwei, die im Allgemeinen die nächste Gruppe in der Richtung entgegengesetzt zur Bewegung des Betrachters ist, einschaltet, um Sichtfelder zu bilden, die mehr auf die Augen des Betrachters zentriert sind.

33. Autostereoskopische Anzeige nach Anspruch 28, in der drei Gruppen von Lichtlinien vorhanden sind, und in der, wenn sich der Betrachter, dessen Augen sich nahe dem Zentrum der Sichtfelder befinden, nach links oder rechts bewegt, wobei eine Lichtliniengruppe eingeschaltet ist, die als Gruppe eins definiert ist, und wenn sich die Augen des Betrachters außerhalb des Zentrums bewegen und sich somit den Rändern der Sichtfelder nähern, sich Gruppe eins ausschaltet und Gruppe zwei, die die nächste Gruppe in Richtung der Bewegung des Betrachters ist, sich einschaltet, während gleichzeitig die Bilder für das linke und rechte Auge auf dem Bildschirm zwischen ungeradzahligen und geradzahligen Spalten wechseln, um Sichtfelder zu bilden, die mehr auf die Augen des Betrachters zentriert sind, um linke und rechte Sichtfelder zu bilden, die das linke bzw. das rechte Auge des Betrachters einschließen.

34. Anzeige nach Anspruch 21, in welcher jedes der Lichtventile einen Unterbereich aufweist und in welcher weiterhin die Fokussiereinrichtung des Weiteren eine Einrichtung zum Beleuchten des Unterbereichs jedes der Lichtventile mit Licht einer unterschiedlichen Farbe aufweist.

35. Autostereoskopische Anzeige nach Anspruch 13, des Weiteren aufweisend optische Antireflexionseinrichtungen auf Flächen der Lichtstreueinrichtung (5) und der transparenten Platten des Substrats (7) und zwischen transparenten Komponenten mit verschiedenen Brechungsindizien oder auf Flächen zwischen transparenten Komponenten und Luft, um Reflexionen an diesen Flächen zu vermeiden.

36. Autostereoskopische Anzeige nach Anspruch 28, in der, wenn sich der Betrachter bewegt und sich verschiedene Liniengruppen einschalten, eine Software gleichzeitig und durchgängig die Szene im nachfolgenden Rahmen erneut darstellt, um die Perspektive der Betrachtung durch das linke und das rechte Auge auf dem Bildschirm auf eine Weise zu ändern, die von der gegenwärtigen Position des Betrachters abhängt.

37. Autostereoskopische Anzeige nach Anspruch 36, in der die Szene erneut dargestellt wird, um die Szene in einer Perspektive darzustellen, die von der gegenwärtigen Position der Augen des Betrachters gesehen wird, damit, wenn sich der Betrachter bewegt, der Betrachter stets die Szene ohne merkliche Verzerrung sieht und um Gegenstände in der Szene herum und über sie hinweg sieht.

38. Autostereoskopische Anzeige nach Anspruch 36, in der die Szene erneut derart dargestellt wird, dass sich die gesamte Szene um einen Punkt an oder nahe der Anzeigenfläche derart dreht, dass eine gedachte Linie im Bildraum, die zwischen dem Drehpunkt und einem Punkt zwischen den Augen des Betrachters verläuft, immer eine Position zwischen den Augen des Betrachters einnimmt, so dass das gleiche perspektivische Bild von dem Betrachter ohne merkliche Verzerrung gesehen wird, wenn sich der Betrachter bewegt.

39. Autostereoskopische Anzeige nach Anspruch 28, in der alle oder mehr als eine Gruppe von Licht ausstrahlenden Linien (493-495) gleichzeitig eingeschaltet werden können, damit das Licht hinter jedem Pixel von beiden Augen des Betrachters gesehen werden kann, wodurch der Betrachter problemlos auf dem Lichtventil angezeigte zweidimensionale Bilder in voller Auflösung sehen kann.

40. Autostereoskopische Anzeige nach Anspruch 28, in der ein Ultraschallstrahler (421) von dem Betrachter (427) getragen wird und zwei oder mehr Empfänger (420a, 420b) an oder nahe der Anzeigevorrichtung (430) angebracht sind, um durch Triangulation Informationen über die Position des Kopfes des Betrachters zu erhalten.

41. Autostereoskopische Anzeige nach Anspruch 28, in der eine Vorrichtung (416), die von einem diffusen zu einem transparenten Zustand geändert werden kann, in den optischen Weg zwischen der Lichtlinien erzeugenden Einrichtung und der Lichtventil-Bildelementschicht derart plaziert wird, dass, wenn sich die Vorrichtung in einem diffusen Zustand befindet, Licht von der Lichtlinien erzeugenden Einrichtung gestreut wird, so dass eine diffuse, gleichmäßige Beleuchtung von der verstellbaren Streuvorrichtung ausstrahlt, so dass Licht hinter jedem Bildelement von jedem Auge des Betrachters gesehen wird, wodurch der Betrachter problemlos auf dem Lichtventil angezeigte zweidimensionale Bilder in voller Auflösung sehen kann.

42. Autostereoskopische Anzeige nach Anspruch 41, in der mehr als eine Gruppe von Lichtlinien eingeschaltet wird, wenn sich die einstellbare Streuvorrichtung (416) im diffusen Zustand befindet, um die Gleichmäßigkeit der Beleuchtung hinter dem Lichtventil zu verbessern, wenn es für zweidimensionales Betrachten verwendet wird.

43. Autostereoskopische Anzeige nach Anspruch 28, in der das Beleuchtungssystem, das verwendet wird, um die Lichtlinien zu bilden, folgende Elemente aufweist: mehr als eine Gruppe linearer Lichtquellen oder punktartiger Lichtquellen (470 bis 472, 490 bis 492), die in Spalten angeordnet sind, wobei jede Gruppe unabhängig voneinander ein- und ausgeschaltet werden kann, eine Fliegenaugen- oder linsenförmige Linsenplatte (473), die mit Zwischenraum vor den Licht ausstrahlenden Stellen vor diesen angeordnet ist, um das Licht in Gruppierungen von Linien, Liniensegmenten oder Spalten von punktartigen Bereichen zu fokussieren, eine nicht reflektierende und undurchsichtige Trennwand (477) unmittelbar vor oder zwischen den Lichtquellen, die so gebildet ist, dass sie Licht daran hindert, hindurchzudringen, außer an den Positionen der Lichtquellen, eine Einrichtung zum Einstellen der Position der Lichtquellen in Bezug aufeinander und auf das optische Element, eine passive dünne Schicht einer Lichtstreueinrichtung (475), auf welche das optische Element das Licht fokussiert und die Muster von Lichtlinien oder Spalten von Segmenten oder Punkten erzeugt, und optische Antireflexionseinrichtungen auf Flächen zwischen transparenten Komponenten unterschiedlicher Brechungsindizien, oder auf Flächen zwischen transparenten Komponenten und Luft, um die Reflexionen an diesen Flächen zu verringern, wobei das Beleuchtungssystem verschiedene Gruppen von Lichtlinien veranlasst, hinter dem Lichtventil dadurch zu erscheinen, dass verschiedene Gruppen der linearen oder punktartigen Lichtquellen je nach den von der Fühleinrichtung der Kopfposition gelieferten Informationen ein- und ausgeschaltet werden.

44. Autostereoskopische Anzeige nach Anspruch 28, in der die Lichtlinien von mehr als einer Gruppe kleiner linearer Lichtquellen oder Spalten von Liniensegmenten oder punktartigen Lichtquellen gebildet werden, die über die Lichtlinienebene verteilt beabstandet sind und in der keine linsenförmige Linse oder Fliegenaugenlinse vorliegt.

45. Autostereoskopische Anzeige nach Anspruch 28, in der die Fühleinrichtung der Kopfposition aus einer Vorrichtung zum Auffinden eines Ultraschallbereichs besteht, bestehend aus mindestens einem Strahler (421) und mindestens zwei Empfängern (420a, 420b), die an oder nahe der Anzeige angebracht sind und die Positionsbestimmung des Kopfes des Betrachters durch Triangulation ermöglichen, und zwar unter Verwendung von Messungen der Zeit, die Ultraschall-Impulse brauchen, um von dem Strahler zu den Empfängern zu gelangen.

46. Autostereoskopische Anzeige nach Anspruch 28, in der die Position des Kopfes des Betrachters bestimmt wird durch einen elektromagnetischen Sensor, der auf der Anzeige angebracht ist und der die Richtung und Ausrichtung eines elektromagnetischen Feldes misst, das von einem elektromagnetischen Strahler ausgestrahlt wird, der auf dem Kopf des Betrachters oder der Kopfausrüstung angebracht ist.

47. Autostereoskopische Anzeige nach Anspruch 28, in der die Position des Kopfes des Betrachters gemessen wird durch einen Infrarotstrahler, der den Bereich vor der Anzeige beleuchtet, und zwei Infrarotsensoren, die das von einem Kopf eines Betrachters oder von einer reflektierenden Vorrichtung auf dem Kopf oder der Kopfausrüstung des Betrachters reflektierte Infrarotlicht abbilden.

48. Autostereoskopische Einrichtung nach Anspruch 28, in der die Position des Kopfes des Betrachters bestimmt wird unter Verwendung von zusammen wirkenden Infrarot-, Ultraschall-, oder elektromagnetischen Sensoren.

49. Autostereoskopische Anzeigevorrichtung nach Anspruch 1, in der die Anzeigevorrichtung (1) eine Bildschirmfläche, auf der eine Vielfalt von dünnen parallelen vertikalen Licht austrahlenden Linien (478, 479, 480, 493, 494, 495) angezeigt oder abgebildet wird, wobei die Fläche zwischen den ausstrahlenden Linien dunkel bleibt, aufweist (2) die Lichtventilgruppierung (482) parallel zu und vor der Bildschirmfläche ist, wobei die Lichtventilgruppierung einzelne Bildelemente aufweist, die in einem gleichmäßigen Muster über dessen Fläche verteilt angeordnet sind, wobei die Muster vertikale Spalten der Bildelemente besitzen, wobei mindestens zwei vertikale Spalten von Bildelementen für jede der Licht ausstrahlenden Linien vorhanden sind, wobei die Licht ausstrahlenden Linien hinter und zwischen den Elementen und einer Linsengruppierung (473) angeordnet sind, die zwischen die Lichtquelle (470, 471, 472, 490, 491, 492) und die Lichtventilgruppierung (482) eingeschoben ist, um Raumbereiche, die im Stand der Technik als "Sichtfelder" (496, 497, 498, 499, 350, 351) bekannt sind, vor der Anzeige zu bilden, innerhalb derer das Auge eines Betrachters alle Lichtlinien hinter entweder einer ungeradzahligen oder einer geradzahligen Gruppe von Pixelspalten sieht, (3) die Anzeige gegebenenfalls in Farbe ist, die durch Filtern von Licht, das durch die Bildelemente entlang der Spalten durchscheint, mit Filtern von mindestens drei Farben erreicht wird, und (4) eine elektronische Einrichtung, um zu veranlassen, dass das Bild für das linke Auge eines stereoskopischen Bildpaars auf den ungeradzahligen oder geradzahligen Spalten von Elementen abgebildet wird, und daß das Bild für das rechte Auge des stereoskopischen Bildpaars auf den restlichen Spalten der Elemente abgebildet wird, wobei die Anzeige des Weiteren durch folgende Merkmale gekennzeichnet ist:

a. Einrichten einer Fühleinrichtung (420a, 420b, 421, 424), die in der Lage ist, die Position einer Person, die die Anzeige betrachtet, zu überwachen, und
b. Verwenden von Informationen dieser Fühleinrichtung, um eine Bewegungseinrichtung (426) zu aktivieren und die Linsengruppierung horizontal in eine Richtung entgegengesetzt zur Bewegungsrichtung des Betrachters um einen solchen Abstand physisch zu bewegen, dass sich das Sichtfeld des linken Auges bewegt, um dem Betrachter derart zu folgen, dass sie weiterhin die Position des linken Auges des Betrachters einschließt, und die Zone für das rechte Auge dem Betrachter ebenfalls derart folgt, dass sie weiterhin die Position des rechten Auges des Betrachters einschließt.

50. Einrichtung nach Anspruch 49, in der das Beleuchtungssystem, das verwendet wird, um die Lichtlinien zu erzeugen und die Lichtlinien veranlasst, sich zu bewegen, aufweist: (1) Licht ausstrahlende Stellen, die vielfache lineare Lichtquellen oder punktartige Lichtquellen (490 bis 492) sind und die in Spalte angeordnet sind, (2) eine Fliegenauge- oder linsenförmige Linsenplatte (473), die mit Zwischenraum vor den Licht ausstrahlenden Stellen angeordnet sind, um das Licht zu Liniengruppierungen, Liniensegmenten oder Spalten von punktartigen Bereichen zu fokussieren, (3) eine nicht reflektierende und undurchsichtige Trennwand (477) unmittelbar vor oder zwischen den Lichtquellen, die derart gestaltet ist, dass sie Licht daran hindert, durch sie hindurchzudringen, außer an den Lichtquellenpositionen, (4) eine Einrichtung zum Einstellen der Position der Lichtquellen in Bezug aufeinander und in Bezug auf das optische Element, (5) eine passive dünne Schicht einer Lichtstreueinrichtung (475), auf welche das optische Element das Licht fokussiert und die Muster aus Lichtlinien oder Spalten von Segmenten oder Punkten erzeugt, (6) optische Antireflexionseinrichtungen auf Flächen zwischen transparenten Komponenten unterschiedlicher Brechungsindizien oder auf Flächen zwischen transparenten Komponenten und Luft, um Reflexionen an diesen Flächen zu verringern, und (7) eine mechanische Einrichtung (426), um die linsenförmige Linsenplatte oder Fliegenaugenlinse horizontal in eine Richtung entgegengesetzt der Bewegungsrichtung des Kopfes des Betrachters zu bewegen, und zwar gemäß Informationen, die von der Positionsfühleinrichtung geliefert werden.

51. Anzeige nach Anspruch 21, in welcher die Lichtventilgruppierung Reihen und Spalten von Lichtventilen aufweist.

52. Verfahren zur Bilderzeugung durch farbige Beleuchtung einer Teilbildfolge unter Verwendung einer Anzeige, wobei die Anzeige (2) eine Lichtquelle (3) und eine Lichtventilgruppierung (6) aufweist und gekennzeichnet ist durch eine optische Fokussiereinrichtung (4), die mit Zwischenraum vor der Lichtquelle angeordnet ist, um das Licht in eine Gruppierung von Linien, Liniensegmenten oder punktartigen Bereichen auf eine Ebene zu fokussieren, die sich im wesentlichen neben der Lichtventilgruppierung befindet, wobei die fokussierten Lichtmuster einen ausgewählten Abschnitt der Lichtventilgruppierung beleuchten, wobei das Verfahren gekennzeichnet ist durch:

das Vorsehen einer Gruppierung (258) von einzeln ansteuerbaren Lichtventilen, die jeweils eine einstellbare Transparenz aufweisen, das Vorsehen eines stroboskopischen Illuminators (257), einschließend eine Gruppe von Lichtquellen, die mindestens zwei Untergruppen von Lichtquellen aufweisen, wobei jede Untergruppe ein farbiges Licht ausstrahlt, das sich von dem farbigen Licht der anderen Untergruppe(n) von Lichtquellen unterscheidet, um gleichzeitig die Lichtgruppierung von Ventilen mit Licht von jeder Untergruppe zu beleuchten, das Ansteuern jedes der Lichtventile vor deren Beleuchtung, um ihre Transparenz zu ändern, um die Intensität des vielfarbigen Lichts einzustellen, um einen Teil einer Farbkomponente des Bildes zu bilden, und das stroboskopische Beleuchten jedes der Lichtventile mit Licht von jeder Untergruppe von Lichtquellen, so dass Licht von mehr als einer Farbe gleichzeitig verschiedene Lichtventile für eine begrenzte Zeit beleuchtet, nachdem sie derart angesteuert wurden, dass jedes der Lichtventile nacheinander von Licht jeder Untergruppe beleuchtet wurde, wodurch ein zusammengesetztes Farbbild von hoher Auflösung von der Lichtventilgruppierung angezeigt wird.

53. Verfahren nach Anspruch 52, des Weiteren aufweisend den Schritt des Abbildens der Vielzahl von vielfarbigen Lichtquellen auf einen passiven Streuer, der nahe der Gruppierung angeordnet ist.

54. Verfahren nach Anspruch 52, des Weiteren aufweisend den Schritt des Abbildens der Vielzahl von vielfarbigen Lichtquellen auf eine oder unmittelbar in der Nähe einer Ebene, die die Lichtventilgruppierung enthält.

55. Verfahren nach Anspruch 54, in welchem der Schritt des Abbildens der Vielzahl von farbigen Lichtquellen das Fokussieren des Lichts in Muster von Linien, Liniensegmenten oder Punkten aufweist.

56. Verfahren nach Anspruch 55, in welchem der Schritt des Fokussierens des Lichts in Muster den Schritt des selektiven Beleuchtens von Unterbereichen der einzelnen Lichtventile aufweist.

57. Verfahren nach Anspruch 52, des Weiteren aufweisend den Schritt des wiederholten Ansteuerns der Gruppierung in einer Abfolge entweder Reihe für Reihe oder Spalte für Spalte, in welchem eine begrenzte Zeitspanne zwischen dem Ansteuern irgendeines der Lichtventile und der Einstellung der Transparenz des Lichtventils aufgrund der Ansteuerung besteht, und in welchem des Weiteren die farbigen Lichtquellen zwischen der Zeit, wenn die Lichtventile ihre Transparenzeinstellung abgeschlossen haben und wenn die Lichtventile erneut angesteuert werden, in einem eingeschalteten Zustand bleiben.

**Revendications**

1. Unité d'affichage autostéréoscopique (2) comprenant une source lumineuse ponctuelle ou linéaire (3) et un réseau de modulateurs de lumière (6), caractérisée par un moyen de focalisation optique (4) possédant une plaque transparente, disposé entre la source lumineuse ponctuelle ou linéaire (3) et le réseau de modulateurs de lumière (6), une surface plane étant orientée dans une direction et une surface opposée possédant une pluralité de lentilles orientées dans la direction opposée, le moyen de focalisation (4) étant à une certaine distance de ladite source lumineuse (3) et devant celle-ci de façon à focaliser la lumière en un réseau de lignes, de segments de lignes, ou de zones ponctuelles sur un plan sensiblement adjacent au réseau de modulateurs de lumière, lesdits motifs lumineux focalisés éclairant des parties sélectionnées du réseau de modulateurs de lumière (6).

2. Unité d'affichage autostéréoscopique selon la revendication 1, dans laquelle la source lumineuse linéaire ou ponctuelle (3) comprend une pluralité de sources lumineuses (61 à 68).

3. Unité d'affichage autostéréoscopique selon la revendication 1, dans laquelle le moyen de focalisation optique comprend une plaque de lentilles lenticulaires (46, 52).

4. Unité d'affichage autostéréoscopique selon la revendication 1, dans laquelle le moyen de focalisation optique comprend une plaque de lentilles de type oeil de mouche (178, 211).

5. Unité d'affichage autostéréoscopique selon la revendication 2, comportant des moyens destinés à adresser de façon répétée le réseau de modulateurs de lumière rangée par rangée ou colonne par colonne, une durée finie existant entre l'adresse d'un quelconque modulateur de lumière individuel et le moment où le modulateur a terminé son changement de transparence en conséquence de l'adresse; comportant en outre des moyens destinés à minuter l'allumage de la source lumineuse pendant la période entre le moment où les pixels, qui sont dans une section du réseau globalement devant celle-ci, ont commencé leur changement de transparence, et le moment où les pixels situés dans ladite section sont à nouveau adressés, la source lumineuse étant éteinte en dehors de ces durées.

6. Unité d'affichage autostéréoscopique selon la revendication 2, dans laquelle les sources lumineuses et le moyen de focalisation optique sont positionnés les uns par rapport aux autres et par rapport au réseau de modulateurs de lumière de façon à créer des jeux de lignes ou de points lumineux clignotant rapidement dans le but de créer des images 3D à haute résolution.

7. Unité d'affichage autostéréoscopique selon la revendication 2, dans laquelle la source lumineuse (61 à 68) et le moyen de focalisation optique (69) sont positionnés l'un par rapport à l'autre et par rapport au réseau de modulateurs de lumière (72) de façon à focaliser des jeux de lignes ou de points lumineux clignotant rapidement près ou à l'intérieur de la couche de pixels du réseau, de manière à créer des images 2D avec une résolution dépassant la résolution à l'échelle du pixel du réseau de modulateurs de lumière.

8. Unité d'affichage autostéréoscopique selon la revendication 2, dans laquelle des moyens mécaniques (73 à 77) sont prévus pour régler la position desdites sources lumineuses les unes par rapport aux autres et par rapport au moyen de focalisation optique.

9. Unité d'affichage autostéréoscopique selon la revendication 2, dans laquelle un moyen déflecteur est disposé entre la source lumineuse et le moyen de focalisation optique de façon à permettre à la source lumineuse de n'éclairer que la section du modulateur de lumière qui est globalement devant elle.

10. Unité d'affichage autostéréoscopique selon la revendication 2, qui comprend un moyen de diffusion de la lumière commandé électriquement (44) placé entre la source lumineuse (42, 43) et le moyen de focalisation optique (46), ledit moyen de diffusion étant susceptible de passer d'un état clair et transparent à un état diffus de diffusion de la lumière sous la commande de l'utilisateur.

11. Unité d'affichage autostéréoscopique selon la revendication 2, qui comprend un moyen de diffusion de la lumière passif (5) entre la source lumineuse (3) et un plan sur lequel le moyen de focalisation optique focalise la lumière et crée les motifs lumineux.

12. Unité d'affichage autostéréoscopique selon la revendication 11, dans laquelle le moyen de diffusion de la lumière comprend un substrat (5) et un matériau de diffusion lié à une surface du substrat.

13. Unité d'affichage autostéréoscopique selon la revendication 12, dans laquelle le substrat comprend une ou plusieurs feuilles de matériau transparent, lesdites feuilles étant montées en contact avec la surface la plus arrière du modulateur de lumière sur le côté tourné dans la direction opposée à l'observateur.

14. Unité d'affichage autostéréoscopique selon la revendication 10, comprenant en outre des moyens antireflets optiques sur des surfaces d'au moins un du moyen de focalisation optique (46), du moyen de diffusion de la lumière commandé électriquement (44), et entre les composants transparents d'indices de réfraction différents, ou sur les surfaces entre les composants transparents et l'air, de façon à réduire les reflets au niveau de ces surfaces.

15. Unité d'affichage autostéréoscopique selon la revendication 2, dans laquelle les sources lumineuses comprennent des moyens émettant une lumière continue (101 à 109), et comprenant en outre un moyen de commande de transmission de la lumière (115 à 124, etc. ; 131, 132, etc.) placé entre les sources lumineuses et l'observateur, afin d'obtenir un effet stroboscopique.

16. Unité d'affichage autostéréoscopique selon la revendication 15, dans laquelle lesdits moyens de commande de transmission de la lumière sont constitués d'un réseau de modulateurs de lumière (11).

17. Unité d'affichage autostéréoscopique selon la revendication 2, dans laquelle ledit réseau de modulateurs de lumière est constitué de dispositifs à cristaux liquides commandés électriquement (50).

18. Unité d'affichage autostéréoscopique selon la revendication 2, dans laquelle lesdites sources lumineuses sont au moins de trois types différents (156 à 159, 160 à 163 ; 164 à 167), chaque type étant susceptible d'émettre de la lumière d'une couleur différente.

19. Unité d'affichage autostéréoscopique selon la revendication 2, comprenant une barrière opaque non réfléchissante (96) adjacente auxdites sources lumineuses, configurée de façon à empêcher la lumière de la traverser sauf aux positions des sources lumineuses.

20. Unité d'affichage autostéréoscopique selon la revendication 2, dans laquelle un moyen mécanique est prévu pour régler la position desdites sources lumineuses les unes par rapport aux autres et par rapport au moyen de focalisation optique.

21. Unité d'affichage autostéréoscopique selon la revendication 2, dans laquelle la pluralité de sources lumineuses (144 à 146, 174 à 176) comprend au moins deux sources lumineuses de couleurs différentes, l'unité d'affichage comprenant en outre un moyen destiné à faire clignoter successivement par éclairs les sources lumineuses de telle sorte que, pendant chaque éclair, au moins une de chaque couleur des au moins deux sources lumineuses de couleurs différentes est la couleur de l'éclair; et dans laquelle le réseau de modulateurs de lumière (143, 181) comprend des modulateurs de lumière pouvant être commandés individuellement et ayant chacun une transparence réglable; et dans laquelle le moyen de focalisation (141, 178) focalise chaque couleur de lumière sur le réseau ou à proximité de celui-ci, de façon à éclairer chaque modulateur de lumière avec une couleur de lumière pendant chaque éclair.

22. Unité d'affichage selon la revendication 21, dans laquelle le moyen de focalisation comprend un réseau plan soit de lentilles lenticulaires (141) soit de lentilles de type oeil de mouche (178).

23. Unité d'affichage selon la revendication 21, comprenant en outre une barrière opaque non réfléchissante comportant une pluralité d'ouvertures adjacentes auxdites sources lumineuses, dans laquelle chaque ouverture est alignée avec une des sources lumineuses.

24. Unité d'affichage selon la revendication 21, comprenant en outre un déflecteur de lumière situé entre les sources lumineuses et le moyen de focalisation, de telle sorte que chaque source lumineuse éclaire une section d'un modulateur de lumière aligné de façon correspondante.

25. Unité d'affichage selon la revendication 21, comprenant en outre un moyen de diffusion de la lumière passif (142) situé entre le moyen de focalisation et le réseau de modulateurs de lumière.

26. Unité d'affichage selon la revendication 21, dans laquelle le moyen de focalisation comprend une couche antireflet sur une de ses surfaces.

27. Unité d'affichage selon la revendication 21, dans laquelle le réseau de modulateurs de lumière est un dispositif d'affichage à cristaux liquides (143, 181).

28. Unité d'affichage autostéréoscopique selon la revendication 1 possédant (1) une surface d'écran sur laquelle est affiché, ou mis en image, un certain nombre de jeux de fines lignes lumineuses verticales parallèles (478 à 480, 493 à 495), chaque jeu contenant une multiplicité desdites lignes, les éléments de chaque jeu étant situés dans les zones entre les éléments des autres jeux, et chaque jeu pouvant être allumé et éteint indépendamment, ladite surface restant sombre entre lesdites lignes lumineuses, (2) un réseau de modulateurs de lumière (482) parallèle audit écran et devant celui-ci, ledit modulateur de lumière possédant des éléments d'image individuels, disposés selon un schéma régulier à travers sa surface, ledit schéma possédant des colonnes verticales desdits éléments d'image, et au moins deux colonnes verticales d'éléments d'images existant pour chacune desdites lignes lumineuses dans chaque jeu desdites lignes, ladite ligne lumineuse étant située derrière et entre lesdits éléments, et un réseau de lentilles (473) étant intercalé entre la source lumineuse (470 à 472, 490 à 492) et le réseau de modulateurs de lumière (482), de façon à établir des zones spatiales connues dans la technique sous le nom de "zones de visualisation" (496 à 499, 350, 351) devant le dispositif d'affichage, à l'intérieur desquelles l'oeil d'un observateur voit toutes les lignes lumineuses d'un jeu donné derrière l'un ou l'autre d'un jeu impair ou pair de colonnes de pixels, (3) ledit dispositif d'affichage étant, optionnellement, obtenu en couleur par filtrage de la lumière qui traverse lesdits éléments d'image le long desdites colonnes à l'aide de filtres d'au moins trois couleurs, et (4) un moyen électronique (483) destiné à faire en sorte que l'image relative à l'oeil gauche d'une paire d'images stéréoscopiques soit affichée sur les colonnes de pixels impaires ou paires, et l'image relative à l'oeil droit d'une paire d'images stéréoscopiques soit affichée sur les colonnes de pixels restantes, l'unité d'affichage étant caractérisée en outre par:

a. l'incorporation d'un dispositif de détection (420a, 420b, 421, 424) susceptible de surveiller la position de la tête d'une personne qui regarde l'unité d'affichage,
b. l'utilisation des informations issues de ce dispositif de détection pour déterminer quel jeu de lignes lumineuses est allumé, et quel jeu d'informations images est affiché sur les colonnes de pixels impaires ou paires du dispositif d'affichage ; c. la sélection consistant à choisir quel jeu de lignes lumineuses est allumé et quel jeu d'informations est affiché sur quelle colonne de pixels selon quelle combinaison de jeu de lignes et d'affichage d'image, amenant ainsi la zone de visualisation de l'oeil gauche formée au niveau de l'emplacement de l'observateur à englober la position de l'oeil gauche de l'observateur, et les zones d'oeil droit à englober la position de l'oeil droit de l'observateur.

29. Unité d'affichage autostéréoscopique selon la revendication 28, dans laquelle deux jeux de lignes lumineuses commandées indépendamment sont produits, les éléments de chaque jeu étant sensiblement vers la gauche ou la droite de la ligne centrale à mi-chemin entre les éléments de l'autre jeu.

30. Unité d'affichage autostéréoscopique selon la revendication 29, dans laquelle, pendant que la tête de l'observateur se déplace horizontalement vers la gauche ou vers la droite, avec ses yeux à l'intérieur des zones de visualisation créées par un jeu de lignes lumineuses, de sorte que les yeux de l'observateur s'approchent des limites des zones de visualisation, ce jeu de lignes lumineuses s'éteint et l'autre jeu s'allume, de sorte que les nouvelles zones de visualisation formées par le second jeu entourent les positions des yeux de l'observateur ; et pendant que l'observateur continue de se déplacer, et que les yeux s'approchent des limites de zone formées par le second jeu, le second jeu s'éteint et le premier jeu s'allume à nouveau, et simultanément l'information image relative aux yeux gauche et droit est commutée entre les colonnes de pixels impaires et paires, de telle sorte que lorsque le premier jeu s'allume à nouveau, les zones de visualisation des yeux gauche et droit sont à nouveau positionnées de façon à entourer les positions des yeux de l'observateur.

31. Unité d'affichage autostéréoscopique selon la revendication 28, dans laquelle le lieu géométrique des positions de l'observateur auxquelles les lignes lumineuses commutent lorsque l'observateur se déplace vers la droite est à la droite du lieu géométrique des positions auxquelles les lignes lumineuses commutent lorsque l'observateur se déplace vers la gauche, de façon à ne pas amener les jeux de lignes lumineuses à commuter rapidement lorsque l'observateur est près d'une position où un changement se produit.

32. Unité d'affichage autostéréoscopique selon la revendication 28, dans laquelle n jeux de lignes lumineuses sont présents, n étant un nombre entier supérieur à 2, et pendant que l'observateur, dont les yeux sont dans la zone de visualisation, se déplace vers la gauche ou la droite, avec un jeu de lignes lumineuses allumé, défini comme étant le jeu un, et que les yeux de l'observateur se déplacent hors du centre et s'approchent ainsi des limites des zones de visualisation, le jeu un s'éteint et le jeu deux, qui est généralement le jeu suivant dans la direction opposée au déplacement de l'observateur, s'allume, afin de créer des zones de visualisation qui sont plus centrées sur les yeux de l'observateur.

33. Unité d'affichage autostéréoscopique selon la revendication 28, dans laquelle trois jeux de lignes lumineuses sont présents, et pendant que l'observateur, dont les yeux sont près du centre des zones de visualisation, se déplace vers la gauche ou la droite, avec un jeu de lignes lumineuses, défini comme étant le jeu un, allumé, et que les yeux de l'observateur se déplacent hors du centre et s'approchent ainsi des limites des zones de visualisation, le jeu un s'éteint et le jeu deux, qui est le jeu suivant dans le même sens que le sens de déplacement de l'observateur, s'allume, pendant que simultanément, les images des yeux gauche et droit sur l'écran sont commutées entre les colonnes impaires et paires, afin de créer des zones de visualisation plus centrées sur les yeux de l'observateur, de manière à créer des zones de visualisation d'yeux gauche et droit qui englobent respectivement les yeux gauche et droit de l'observateur.

34. Unité d'affichage selon la revendication 21, dans laquelle chacun des modulateurs de lumière comprend une région secondaire, et en outre dans laquelle le moyen de focalisation comprend en outre un moyen destiné à éclairer la région secondaire de chacun des modulateurs de lumière avec de la lumière d'une couleur différente.

35. Unité d'affichage autostéréoscopique selon la revendication 13, comprenant en outre des moyens antireflets optiques sur les surfaces du moyen de diffusion de la lumière (5) et des feuilles transparentes du substrat (7), et entre les composants transparents d'indices de réfraction différents, ou sur les surfaces entre les composants transparents et l'air, de manière à réduire les reflets au niveau de ces surfaces.

36. Unité d'affichage autostéréoscopique selon la revendication 28, dans laquelle, pendant que l'observateur se déplace et que différents jeux de lignes lumineuses s'allument, un logiciel redessine simultanément et en continu la scène dans des cadres successifs, de façon à changer la perspective des vues des yeux gauche et droit sur l'écran d'une manière qui dépend de la position courante de l'observateur.

37. Unité d'affichage autostéréoscopique selon la revendication 36, dans laquelle la scène est redessinée de manière à dessiner la scène avec une perspective vue des positions courantes des yeux de l'observateur, de sorte que, pendant que l'observateur se déplace, celui-ci verra toujours la scène sans distorsion appréciable et pourra regarder autour et sur des objets situés dans la scène.

38. Unité d'affichage autostéréoscopique selon la revendication 36, dans laquelle la scène est redessinée de telle manière que toute la scène tourne autour d'un point au niveau de la surface d'affichage ou près de celle-ci, de telle façon qu'une ligne imaginaire dans l'espace image s'étendant entre le point de rotation et un point entre les yeux de l'observateur reste toujours positionnée entre les yeux de l'observateur, de sorte que l'observateur voit la même vue en perspective de l'image sans distorsion appréciable, pendant qu'il se déplace.

39. Unité d'affichage autostéréoscopique selon la revendication 28, dans laquelle tous ou plusieurs jeux de lignes lumineuses (493 à 495) peuvent être allumés simultanément, de sorte que chacun des yeux de l'observateur voit la lumière derrière chaque pixel, ce qui permet ainsi à l'observateur de voir facilement des images bidimensionnelles à pleine résolution affichées sur le modulateur de lumière.

40. Unité d'affichage autostéréoscopique selon la revendication 28, dans laquelle l'observateur (427) porte un émetteur à ultrasons (421), et deux ou plusieurs récepteurs (420a, 420b) sont montés au niveau du dispositif d'affichage (430) ou près de celui-ci, afin d'obtenir une information sur la position de la tête de l'observateur par l'intermédiaire d'une triangulation.

41. Unité d'affichage autostéréoscopique selon la revendication 28, dans laquelle un dispositif (416), qui peut passer d'un état diffus à un état transparent, est placé dans le chemin optique entre le moyen de production de lignes lumineuses et la couche d'éléments d'image des modulateurs de lumière, de telle manière que, lorsque le dispositif est dans un état diffus, la lumière issue du moyen de production de lignes lumineuses est diffusée, si bien qu'un éclairage diffus uniforme émane du dispositif de diffusion variable, de sorte que chacun des yeux de l'observateur voit la lumière derrière chaque élément d'image, ce qui permet ainsi à l'observateur de voir facilement les images bidimensionnelles à pleine résolution affichées sur le modulateur de lumière.

42. Unité d'affichage autostéréoscopique selon la revendication 41, dans laquelle plusieurs jeux de lignes lumineuses sont allumés lorsque le dispositif de diffusion variable (416) est à l'état diffus, de façon à améliorer l'uniformité de l'éclairage derrière le modulateur de lumière lorsqu'il est utilisé pour une visualisation bidimensionnelle.

43. Unité d'affichage autostéréoscopique selon la revendication 28, dans laquelle le système d'éclairage utilisé pour créer les lignes lumineuses comprend plusieurs jeux de sources lumineuses linéaires ou de sources lumineuses ponctuelles (470 à 472, 490 à 492) disposées en colonnes, chaque jeu pouvant être allumé et éteint indépendamment des autres, une plaque de lentilles lenticulaires ou de type oeil de mouche (473) étant disposée à une certaine distance desdits sites d'émission de lumière et devant ceux-ci de façon à focaliser la lumière en des réseaux de lignes, de segments de lignes, ou de colonnes de zones ponctuelles, une barrière non réfléchissante et opaque (477) étant positionnée immédiatement devant lesdites sources lumineuses ou entre elles, et configurée de façon à empêcher la lumière de la traverser sauf au niveau des positions des sources lumineuses, un moyen destiné à régler la position desdites sources lumineuses les unes par rapport aux autres et par rapport à l'élément optique, une fine couche passive d'un moyen de diffusion de la lumière (475), sur laquelle l'élément optique concentre la lumière et crée les motifs de lignes lumineuses ou de colonnes de segments ou de points, et des moyens antireflets optiques sur des surfaces entre des composants transparents d'indices de réfraction différents, ou sur des surfaces entre les composants transparents et l'air, de façon à réduire les reflets au niveau de ces surfaces, ledit système d'éclairage faisant en sorte de faire apparaître différents jeux de lignes lumineuses derrière le modulateur de lumière en allumant et en éteignant différents jeux de sources lumineuses linéaires ou ponctuelles selon les informations fournies par le dispositif de détection de la position de la tête.

44. Unité d'affichage autostéréoscopique selon la revendication 28, dans laquelle les lignes lumineuses sont formées par plusieurs jeux de petites sources lumineuses linéaires ou de colonnes de segments de lignes ou de sources lumineuses ponctuelles espacées à travers le plan des lignes lumineuses, et aucune lentille lenticulaire ou lentille de type oeil de mouche n'est présente.

45. Unité d'affichage autostéréoscopique selon la revendication 28, dans laquelle le dispositif de détection de la position de la tête est constitué d'un dispositif de repérage à plage ultrasonore constitué d'au moins un émetteur (421) et d'au moins deux récepteurs (420a, 420b) montés au niveau du dispositif d'affichage ou près de celui-ci, et permettant une détermination de la position de la tête de l'observateur par l'intermédiaire d'une triangulation, grâce à l'utilisation des mesures du temps nécessaire pour que des impulsions ultrasonores passent de l'émetteur aux récepteurs.

46. Unité d'affichage autostéréoscopique selon la revendication 28, dans laquelle la position de la tête de l'observateur est déterminée au moyen d'un capteur électromagnétique monté sur le dispositif d'affichage, qui mesure la direction et l'orientation d'un champ électromagnétique émis par un émetteur électromagnétique monté sur la tête de l'observateur ou sur un casque.

47. Unité d'affichage autostéréoscopique selon la revendication 28, dans laquelle la position de la tête de l'observateur est mesurée au moyen d'un émetteur de rayons infrarouges qui éclaire la région située devant le dispositif d'affichage, et de deux capteurs infrarouges qui mettent en image la lumière infrarouge réfléchie de la tête d'un observateur ou d'un dispositif réfléchissant positionné sur la tête de l'observateur ou sur un casque.

48. Unité d'affichage autostéréoscopique selon la revendication 28, dans laquelle la position de la tête de l'observateur est déterminée par le biais de l'utilisation de capteurs infrarouges, ultrasons, ou électromagnétiques fonctionnant en combinaison.

49. Dispositif d'unité d'affichage autostéréoscopique selon la revendication 1, dans laquelle l'unité d'affichage comprend (1) une surface d'écran sur laquelle est affichée, ou mise en image, une multiplicité de fines lignes lumineuses verticales parallèles (478, 479, 480, 493, 494, 495), ladite surface restant sombre entre lesdites lignes lumineuses, (2) le réseau de modulateurs de lumière (482) étant parallèle et devant ladite surface d'écran, ledit réseau de modulateurs de lumière possédant des éléments d'image individuels disposés selon un schéma régulier à travers sa surface, ledit schéma possédant des colonnes verticales desdits éléments d'image, au moins deux colonnes verticales d'éléments d'image existant pour chacune des lignes lumineuses, lesdites lignes lumineuses étant situées derrière et entre lesdits éléments et un réseau de lentilles (473) étant intercalé entre la source lumineuse (470, 471, 472, 490, 491, 492) et le réseau de modulateurs de lumière (482), de façon à établir des zones spatiales connues dans la technique sous le nom de "zones de visualisation" (496, 497, 498, 499, 350, 351) devant le dispositif d'affichage, à l'intérieur desquelles les yeux d'un observateur voient toutes les lignes lumineuses derrière un jeu de colonnes de pixels soit impair ou pair, (3) ledit dispositif d'affichage étant, optionnellement, obtenu en couleur par filtrage de la lumière traversant lesdits éléments d'image le long desdites colonnes à l'aide de filtres d'au moins trois couleurs, et (4) un moyen électronique destiné à faire en sorte que l'image de l'oeil gauche d'une paire d'images stéréoscopiques soit affichée sur les colonnes d'éléments impaires ou paires, et que la vue de l'oeil droit de la paire d'images stéréoscopiques soit affichée sur les colonnes d'éléments restantes, l'unité d'affichage étant caractérisée en outre par :

  a. l'incorporation d'un dispositif de détection (420a, 420b, 421, 424) susceptible de surveiller la position d'une personne qui regarde le dispositif d'affichage, et
  b. l'utilisation des informations issues de ce dispositif de détection pour activer un dispositif de déplacement (426) et déplacer horizontalement physiquement le réseau de lentilles dans un sens opposé au sens du déplacement de l'observateur sur une distance telle que la zone de visualisation de l'oeil gauche se déplace de façon à suivre l'observateur de telle manière qu'elle continue d'englober la position de l'oeil gauche de l'observateur, et la zone de l'oeil droit suit également l'observateur de telle manière qu'elle continue d'englober la position de l'oeil droit de l'observateur.

**50.** Dispositif d'unité selon la revendication 49, dans laquelle le système d'éclairage utilisé pour créer les lignes lumineuses et provoquer le déplacement des lignes lumineuses comprend (1) des sites d'émission de lumière qui sont des sources lumineuses linéaires ou des sources lumineuses ponctuelles multiples (490 à 492) disposées en colonnes, (2) une plaque de lentilles lenticulaires ou de type oeil de mouche (473) à une certaine distance des sites d'émission de lumière et devant ceux-ci, de façon à focaliser la lumière en réseaux de lignes, de segments de lignes, ou de colonnes de zones ponctuelles, (3) une barrière non réfléchissante et opaque (477) immédiatement devant ou entre lesdites sources lumineuses, configurée de façon à empêcher la lumière de la traverser sauf au niveau des positions des sources lumineuses, (4) un moyen destiné à régler la position desdites sources lumineuses les unes par rapport aux autres et par rapport à l'élément optique, (5) une couche mince passive d'un moyen de diffusion de la lumière (475) sur laquelle l'élément optique concentre la lumière et crée les motifs de lignes lumineuses ou de colonnes de segments ou de points, (6) un moyen antireflet optique sur les surfaces entre les composants transparents d'indices de réfraction différents, ou sur les surfaces entre les composants transparents et l'air, de façon à réduire les reflets au niveau de ces surfaces, et (7) des moyens mécaniques (426) destinés à déplacer horizontalement la plaque de lentilles lenticulaires ou les lentilles pseudostéréoscopiques dans un sens opposé au sens du déplacement de la tête de l'observateur, selon les informations fournies par le dispositif de détection de position.

**51.** Unité d'affichage selon la revendication 21, dans laquelle le réseau de modulateurs de lumière comprend des rangées et des colonnes de modulateurs de lumière.

**52.** Procédé de formation d'images par éclairage couleur à séquence de trames utilisant une unité d'affichage, ladite unité d'affichage (2) comprenant une source lumineuse (3) et un réseau de modulateurs de lumière (6), et étant caractérisée par un moyen de focalisation optique (4) à une certaine distance de ladite source lumineuse et devant celle-ci de façon à focaliser la lumière en un réseau de lignes, de segments de lignes, ou de zones ponctuelles sur un plan sensiblement adjacent au réseau de modulateurs de lumière, lesdits motifs lumineux focalisés éclairant une partie sélectionnée du réseau de modulateurs de lumière, ledit procédé étant caractérisé par les étapes consistant à :

prévoir un réseau (258) de modulateurs de lumière adressables individuellement ayant chacun une transparence réglable;

prévoir une source lumineuse stroboscopique (257) comportant un jeu de sources lumineuses contenant au moins deux jeux secondaires de sources lumineuses, chaque jeu secondaire émettant une lumière colorée différente de la lumière colorée de l'autre ou des autres jeux secondaires de sources lumineuses, pour éclairer simultanément le réseau de modulateurs de lumière par de la lumière issue de chaque jeu secondaire;

adresser chacun des modulateurs de lumière avant de les éclairer pour faire varier leur transparence, de façon à moduler l'intensité de la lumière multicolore afin de former une partie d'une composante colorée de l'image ; et

éclairer de façon stroboscopique chacun des modulateurs de lumière avec la lumière issue de chaque jeu secondaire de sources lumineuses, de sorte qu'une lumière de plusieurs couleurs éclaire simultanément différents modulateurs de lumière pendant une durée finie après leur adressage, de telle sorte que chacun des modulateurs de lumière est éclairé séquentiellement par la lumière issue de chaque jeu secondaire, ce par quoi une image couleur composite à haute résolution est affichée par le réseau de modulateurs de lumière.

**53.** Procédé selon la revendication 52, comprenant en outre l'étape consistant à mettre en image la pluralité de sources lumineuses multicolores sur un diffuseur passif situé à proximité du réseau.

**54.** Procédé selon la revendication 52, comprenant en outre l'étape consistant à mettre en image la pluralité de sources lumineuses multicolores sur un plan contenant le réseau de modulateurs de lumière ou à proximité immédiate de celui-ci.

**55.** Procédé selon la revendication 54, dans lequel l'étape consistant à mettre en image la pluralité de sources lumineuses multicolores comprend l'étape consistant à focaliser la lumière en motifs constitués de lignes, de segments de lignes ou de points.

**56.** Procédé selon la revendication 55, dans lequel l'étape consistant à focaliser la lumière en motifs comprend l'étape consistant à éclairer sélectivement des régions secondaires des modulateurs de lumière individuels.

**57.** Procédé selon la revendication 52, comprenant en outre l'étape consistant à adresser de façon répétée le réseau soit en une séquence rangée par rangée, soit en une séquence colonne par colonne, dans lequel il existe une durée finie entre l'adresse d'un quelconque des modulateurs de lumière et le réglage de la transparence du modulateur de lumière dû à l'adresse, en outre dans lequel les sources lumineuses multicolores restent à l'état allumé entre le moment où les modulateurs de lumière ont terminé leur réglage de transparence et le moment où lesdits modulateurs de lumière sont adressés à nouveau.

## FIG. 1

## FIG. 2

TOP ROW
20

L  R
C  O
D  W
   S

BOTTOM
ROW
21

$T_0$ $T_1$     $T_2$ $T_3$     $T_4$

LCD SCAN

BLANKING

LCD SCAN

22          23          24          22

## FIG. 3a

CLEAR

20

T  P
O  I
P  X
   E
   L
   S

R
O
W

OPAQUE

CLEAR

21

B  P
O  I
T  X
T  E
O  L
M  S
R
O
W

OPAQUE

## FIG. 3b

EP 0 659 324 B1

FULL
ON

LIGHT SOURCE

FULL
OFF

TIME:
(ms)  0   1   2   3   4   5   6   7   8   9   10  11  12  13  14  15  16  17  18

## *FIG. 3c*

FIG. 4

**FIG. 5**

**FIG. 6**

101 102 103 104 105 106 107 108 109 110 111 112 113 114 115 116

**FIG. 6A**

**FIG. 7**

69 70 72

**FIG. 8**

81 82 83 84 85 86 87 88

93 94 95

121 122 123 124 125 126 127 128 129 130 131 132 133 134 135 136

# FIG. 8A

101 102 103 104 105 106 107 108 109

110
111

115 116 117 118 119 120 121 122

112
113
114

123 124

131 132

# FIG. 9

~190

~191

~192

~193

# FIG. 10

~194

~195

~196

~197

# FIG. 11

160   157   165   162   159   167
156   164   161   158   166   163
~150
R  G  B  R  G  B  R  G  B  R  G  B  ~151
~152
~153
~154
~155

# FIG. 14

**FIG. 12**

**FIG. 13**

**FIG. 15**

**_FIG_. 16 a**

FULL ON

243

FULL
OFF

244

PIXEL CHANGES

245

246

247

248

249

250

O          TIME

_FIG. 16 b_

EP 0 659 324 B1

FIG. 16 c

**FIG. 17**

**FIG. 19**

**FIG. 18**

**FIG.** 20

FIG. 21

FIG. 22

**FIG. 23**

EP 0 659 324 B1

**FIG. 24**

FIG. 25

FIG. 26

EP 0 659 324 B1

FIG. 27

FIG. 28c

FIG. 28b

FIG. 28a

FIG. 29

FIG. 30c

FIG. 30b

FIG. 30a

FIG. 31c

FIG. 31b

FIG. 31a

FIG. 32

FIG. 33

401

451 450    451   450  451   450  451   450  451  450

427

FIG. 34